# NEW EUROPEAN PATENT SPECIFICATION

(11) **EP 3 135 543 B2**
(45) Date of publication and mention of the opposition decision: **28.09.2022**
(45) Mention of the grant of the patent: 26.12.2018
(21) Application number: 15782714.8
(22) Date of filing: 20.04.2015
(51) Int. Cl.: B60R 21/264, B01J 7/00

(54) **GAS GENERATOR**
GASGENERATOR
GÉNÉRATEUR DE GAZ

(30) Priority: 25.04.2014 JP 2014091266; 07.10.2014 JP 2014206274
(43) Date of publication of application: 01.03.2017
(73) Proprietor: Nippon Kayaku Kabushiki Kaisha, Tokyo 100-0005 (JP)
(72) Inventor: UEDA, Shinya, Himeji-shi Hyogo 679-2123 (JP); IWAI, Yoshitaka, Himeji-shi Hyogo 679-2123 (JP); OHSUGI, Satoshi, Himeji-shi Hyogo 679-2123 (JP); YAMAGUCHI, Masahiro, Himeji-shi Hyogo 679-2123 (JP)
(74) Representative: TBK
(86) International application number: PCT/JP2015/062010
(87) International publication number: WO 2015/163290

(56) References cited:
- EP-A1- 0 783 997
- WO-A1-96/10494
- WO-A1-2005/014345
- WO-A1-2012/111727
- DE-U1- 20 219 898
- JP-A- H0 776 255
- JP-A- 2003 191 816
- JP-A- 2012 171 362
- JP-A- 2013 241 102
- US-A- 5 269 561
- US-A- 5 471 932
- US-A- 5 472 229
- US-A- 5 564 738
- US-A1- 2002 053 788
- US-A1- 2003 160 437
- US-A1- 2007 039 508
- US-A1- 2011 239 891
- US-B1- 6 224 098
- US-B2- 6 869 102
- US-B2- 7 530 598

## Description

### TECHNICAL FIELD

The present invention relates to a gas generator incorporated in a passenger protection apparatus which protects a driver and/or a passenger at the time of collision of a vehicle or the like, and particularly to a gas generator incorporated in an air bag apparatus equipped in a car.

### BACKGROUND ART

From a point of view of protection of a driver and/or a passenger in a car, an air bag apparatus which is a passenger protection apparatus has conventionally widely been used. The air bag apparatus is equipped for the purpose of protecting a driver and/or a passenger against shock caused at the time of collision of a vehicle, and it receives a body of a driver or a passenger with an air bag serving as a cushion, as the air bag is expanded and developed instantaneously at the time of collision of the vehicle.

The gas generator is equipment which is incorporated in this air bag apparatus, an igniter therein being ignited in response to power feed through a control unit at the time of collision of a vehicle to thereby burn a gas generating agent with flame caused by the igniter and instantaneously generate a large amount of gas, and thus expands and develops an air bag.

Gas generators of various structures are available. A disc type gas generator of which outer geometry is in a substantially short columnar shape is available as a gas generator suitably used for an air bag apparatus on a driver's seat side, and a cylinder type gas generator of which outer geometry is in a substantially long columnar shape is available as a gas generator suitably used for a side air bag apparatus, a curtain air bag apparatus, an air bag apparatus on a passenger's seat side, and a knee air bag apparatus.

It is important for a gas generator to burn a gas generating agent continually in a stable manner at the time of actuation of an igniter. In order to burn the gas generating agent continually in a stable manner, the gas generating agent should be placed in a prescribed high-pressure environment. Therefore, the gas generator is designed to narrow a gas discharge opening provided in the housing to a desired size so that a pressure in a housing is raised to a considerable level at the time of actuation of the igniter.

It is important for the gas generator to reliably seal a space in the housing from an external space in order to prevent the gas generating agent accommodated in the housing or an enhancer agent loaded in the housing as necessary for burning the gas generating agent from absorbing moisture. If the gas generating agent or the enhancer agent absorbs moisture, desired output characteristics may not be obtained at the time of actuation of the gas generator.

Therefore, such a construction has generally been adopted for a conventional gas generator that a gas discharge opening is narrowed to a necessary opening diameter so as to sufficiently raise a pressure in the housing at the time of actuation and a sealing tape made of a metal is bonded to the housing so as to close the gas discharge opening.

Normally, output characteristics of the gas generator are affected by an ambient environment in which the gas generator is placed, and particularly dependent on an ambient temperature. The output characteristics tend to be enhanced in a high-temperature environment and weakened in a low-temperature environment. In the high-temperature environment, a gas is discharged earlier and more strongly, and in the low-temperature environment, the gas is discharged more slowly and weakly. It is important to suppress as much as possible, variation in output characteristics based on such a difference in ambient temperature.

A method of adjusting an opening diameter of a gas discharge opening or a thickness of a sealing tape described above has been known as a specific method of suppressing variation in output characteristics based on a difference in ambient temperature.

For example, International Publication WO2005/014345 (PTD 1) describes lessening of difference in performance at each ambient temperature by setting two or more types of hole diameters of gas discharge openings provided in a housing and varying a thickness of a sealing tape closing the gas discharge openings in accordance with the hole diameter.

Japanese Patent Laying-Open No. 2000-335361 (PTD 2) describes suppression of variation in output characteristics at each ambient temperature by variously changing hole diameters of gas discharge openings provided in a housing or a thickness of a sealing tape closing the gas discharge openings.

Japanese Patent Laying-Open No. 2002-96705 (PTD 3) discloses a gas generator in which two independent combustion chambers are provided in a housing, and the number of bonded sealing tapes for closing gas communication holes provided in a partition wall portion located between the combustion chambers (that is, the number of layered sealing tapes) is set to two in order for resistance to break of the sealing tape closing the gas communication holes and resistance to break of the sealing tape closing the gas communication holes provided in other portions to differ from each other, although variation in output characteristics based on the difference in ambient temperature is not suppressed.

### CITATION LIST

### PATENT DOCUMENT

PTD 1: International Publication WO2005/014345
PTD 2: Japanese Patent Laying-Open No. 2000-335361
PTD 3: Japanese Patent Laying-Open No. 2002-96705

US 2011/239891 A1 discloses a dual type gas generator including two igniters and a cylindrical partition wall portion including a plurality of gas passage holes through which a gas generated as a result of burning of the gas generating agent passes, wherein the plurality of gas passage holes are provided to scatter at different positions at least in a circumferential direction of the partition wall portion.

### SUMMARY OF INVENTION

### TECHNICAL PROBLEM

When a plurality of types of sealing tapes different in specifications (that is, thickness) are employed as disclosed in International Publication WO2005/014345 and Japanese Patent Laying-Open No. 2000-335361 in order to vary resistance to break of each sealing tape closing a plurality of gas passage holes (including the gas discharge openings or the gas communication holes described above), the number of parts increases and there will be manufacturing cost pressure.

In order to avoid such a problem, it is effective to vary the number of layered sealing tapes as disclosed in Japanese Patent Laying-Open No. 2002-96705. The sealing tape, however, is a tacky member, and it is considerably difficult to perform an operation to position and bond the sealing tape to a prescribed site of a gas generator. When sealing tapes are bonded as being layered without taking particular measures, workability will significantly become poor and productivity will inevitably lower, which gives rise to another problem.

Therefore, the present invention was made with attention being paid to such a problem, and an object is to provide a gas generator in which resistance to break of sealing tapes which close gas passage holes can be varied without lowering in productivity in manufacturing.

### SOLUTION TO PROBLEM

The object of the invention is solved with a gas generator according to claim 1. Further advantageous developments of the invention are subject-matter of the dependent claims.

### ADVANTAGEOUS EFFECTS OF INVENTION

According to the present invention, a gas generator in which resistance to break of sealing tapes which close gas passage holes can be varied without lowering in productivity in manufacturing can be provided.

### BRIEF DESCRIPTION OF DRAWINGS

Fig. 1 is a schematic diagram of a gas generator in a first embodiment of the present invention.
Fig. 2 is an end view of an upper shell according to a first construction example based on the first embodiment of the present invention.
Fig. 3 is a cross-sectional view of the upper shell according to the first construction example based on the first embodiment of the present invention.
Fig. 4 is an end view of an upper shell according to a second construction example based on the first embodiment of the present invention.
Fig. 5 is a cross-sectional view of an upper shell according to a third construction example based on the first embodiment of the present invention.
Fig. 6 is an end view of an upper shell according to a fourth construction example based on the first embodiment of the present invention.
Fig. 7 is a cross-sectional view of an upper shell according to a fifth construction example based on the first embodiment of the present invention.
Fig. 8 is an end view of an upper shell according to a sixth construction example based on the first embodiment of the present invention.
Fig. 9 is an end view of an upper shell according to a seventh construction example based on the first embodiment, which is not covered by the claims but useful for understanding the present invention.
Fig. 10 is an end view of an upper shell of a gas generator in a second embodiment of the present invention.
Fig. 11 is a cross-sectional view of an upper shell of the gas generator in the second embodiment of the present invention.
Fig. 12 is a diagram schematically showing gas discharge openings which open stepwise when the gas generator in the second embodiment of the present invention is actuated.
Fig. 13 is a cross-sectional view of an upper shell of a gas generator in a third embodiment of the present invention.
Fig. 14 is a diagram schematically showing a state in the vicinity of a gas discharge opening when the gas generator in the third embodiment of the present invention is actuated.
Fig. 15 is a cross-sectional view of an upper shell of a gas generator in a fourth embodiment of the present invention.

### DESCRIPTION OF EMBODIMENTS

An embodiment of the present invention will be described hereinafter in detail with reference to the drawings. An embodiment shown below represents application of the present invention to a disc type gas generator suitably incorporated in an air bag apparatus equipped in a steering wheel or the like of a car. The same or common elements in the embodiments shown below have the same reference characters allotted in the drawings and description thereof will not be repeated.

### (First Embodiment)

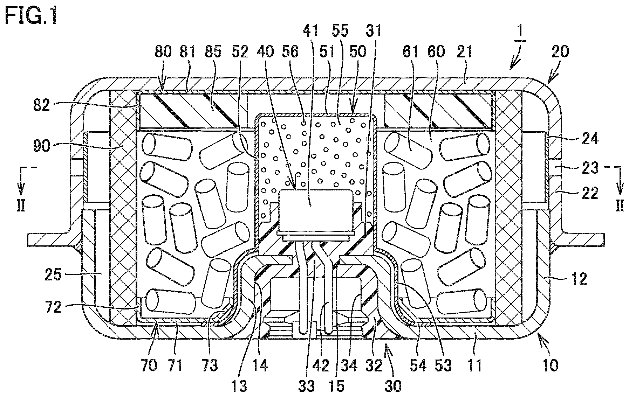

Fig. 1 is a schematic diagram of a gas generator in a first embodiment of the present invention. A construction of a gas generator in the present embodiment will initially be described with reference to Fig. 1.

As shown in Fig. 1, a gas generator 1 in the present embodiment has a short substantially cylindrical housing having opposing axial ends closed, and is constructed to accommodate as internal construction components in an accommodation space provided in the housing, a holding portion 30, an igniter 40, a cup-shaped member 50, an enhancer agent 56, a gas generating agent 61, a lower-side supporting member 70, an upper-side supporting member 80, a cushion material 85, a filter 90, and the like. In the accommodation space provided in the housing, a combustion chamber 60 mainly accommodating gas generating agent 61 among the internal construction components described above is located.

The short substantially cylindrical housing includes a lower shell 10 and an upper shell 20. Each of lower shell 10 and upper shell 20, for example, is made of a press-formed product formed by press-working a plate-shaped member made of rolled metal. For example, a metal plate composed of stainless steel, iron steel, an aluminum alloy, a stainless alloy, or the like is made use of as the plate-shaped member made of metal which forms lower shell 10 and upper shell 20, and suitably, what is called a high tensile steel plate which is free from such failure as fracture even at the time of application of tensile stress not lower than 440 MPa and not higher than 780 MPa is suitably made use of.

Lower shell 10 and upper shell 20 are each formed in a substantially cylindrical shape with bottom, and the housing is constructed by combining and joining the shells such that open surfaces thereof face each other. Lower shell 10 has a bottom plate portion 11 and a circumferential wall portion 12 and upper shell 20 has a top plate portion 21 and a circumferential wall portion 22. The axial end portions of the housing are thus closed by top plate portion 21 and bottom plate portion 11. Electron-beam welding, laser welding, friction welding, or the like is suitably made use of for joining lower shell 10 and upper shell 20 to each other.

A protruding cylindrical portion 13 protruding toward top plate portion 21 is provided in a central portion of bottom plate portion 11 of lower shell 10, so that a depression portion 14 is formed in the central portion of bottom plate portion 11 of lower shell 10. Protruding cylindrical portion 13 is a site to which igniter 40 is fixed with holding portion 30 described above being interposed, and depression portion 14 is a site serving as a space for providing a female connector portion 34 in holding portion 30.

Protruding cylindrical portion 13 is formed to be in a substantially cylindrical shape with bottom, and an opening 15 in an asymmetrical shape (for example, in a D shape, a barrel shape, or an elliptical shape) when viewed two-dimensionally is provided at an axial end portion located on a side of top plate portion 21. Opening 15 is a site through which a pair of terminal pins 42 of igniter 40 passes.

As shown in Fig. 1, igniter 40 serves to produce flames and includes an ignition portion 41 and a pair of terminal pins 42 described above. Ignition portion 41 contains an ignition agent producing flames by being ignited to burn at the time of actuation and a resistor for igniting this ignition agent. The pair of terminal pins 42 is connected to ignition portion 41 for igniting the ignition agent.

More specifically, ignition portion 41 includes a squib cup formed like a cup and a base portion closing an opening end of the squib cup and holding a pair of terminal pins 42 as being inserted therein. The resistor (bridge wire) is attached to couple tip ends of the pair of terminal pins 42 inserted in the squib cup, and the ignition agent is loaded in the squib cup so as to surround the resistor or to be in proximity to the resistor.

Here, a Nichrome wire or the like is generally made use of as a resistor, and ZPP (zirconium potassium perchlorate), ZWPP (zirconium tungsten potassium perchlorate), lead tricinate, or the like is generally made use of as the ignition agent. The squib cup and the base portion described above are generally made of a metal or plastic.

Upon sensing collision, a prescribed amount of current flows in a resistor through terminal pin 42. As the prescribed amount of current flows in the resistor, Joule heat is generated in the resistor and the ignition agent starts burning. Flame at a high temperature caused by burning bursts the squib cup accommodating the ignition agent. A time period from flow of a current in the resistor until actuation of igniter 40 is generally not longer than 2 milliseconds in a case that the Nichrome wire is employed as the resistor.

Igniter 40 is attached to bottom plate portion 11 in such a manner that terminal pin 42 is introduced from the inside of lower shell 10 to pass through opening 15 provided in protruding cylindrical portion 13. Specifically, holding portion 30 formed from a resin molded portion is provided around protruding cylindrical portion 13 provided in bottom plate portion 11, and igniter 40 is fixed to bottom plate portion 11 as being held by holding portion 30.

Holding portion 30 is formed through injection molding (more specifically, insert molding) with the use of a mold, and formed by attaching an insulating fluid resin material to bottom plate portion 11 so as to reach a part of an outer surface from a part of an inner surface of bottom plate portion 11 through opening 15 provided in bottom plate portion 11 of lower shell 10 and solidifying the fluid resin material.

Igniter 40 is fixed to bottom plate portion 11 with holding portion 30 being interposed, in such a manner that terminal pin 42 is introduced from the inside of lower shell 10 to pass through opening 15 during molding of holding portion 30 and the fluid resin material described above is fed to fill a space between igniter 40 and lower shell 10 in this state.

For a source material for holding portion 30 formed by injection molding, a resin material excellent in heat resistance, durability, corrosion resistance, and the like after curing is suitably selected and made use of. In that case, without being limited to a thermosetting resin represented by an epoxy resin and the like, a thermoplastic resin represented by a polybutylene terephthalate resin, a polyethylene terephthalate resin, a polyamide resin (such as nylon 6 or nylon 66), a polypropylene sulfide resin, a polypropylene oxide resin, and the like can also be made use of. In a case where these thermoplastic resins are selected as a source material, in order to ensure mechanical strength of holding portion 30 after molding, glass fibers or the like are preferably contained as fillers in these resin materials. In a case where sufficient mechanical strength can be ensured only by a thermoplastic resin, however, a filler as described above does not have to be added.

Holding portion 30 has an inner cover portion 31 covering a part of an inner surface of bottom plate portion 11 of lower shell 10, an outer cover portion 32 covering a part of an outer surface of bottom plate portion 11 of lower shell 10, and a coupling portion 33 located within opening 15 provided in bottom plate portion 11 of lower shell 10 and continuing to each of inner cover portion 31 and outer cover portion 32.

Holding portion 30 is secured to bottom plate portion 11 at a surface on a side of bottom plate portion 11, of each of inner cover portion 31, outer cover portion 32, and coupling portion 33. Holding portion 30 is secured at each of a side surface and a lower surface of igniter 40 which is closer to a lower end of ignition portion 41, as well as a surface of a portion of igniter 40 which is closer to an upper end of terminal pin 42. Thus, opening 15 is completely buried by terminal pin 42 and holding portion 30, so that hermeticity of the space in the housing is ensured by sealability ensured in that portion. Since opening 15 is provided to be asymmetrical in a plan view as described above, opening 15 and coupling portion 33 also function as a rotation stop mechanism which prevents rotation of holding portion 30 with respect to bottom plate portion 11, by burying opening 15 with coupling portion 33.

In a portion of outer cover portion 32 of holding portion 30, which faces the outside, female connector portion 34 is formed. This female connector portion 34 is a site for receiving a male connector (not shown) of a harness for connecting igniter 40 and a control unit (not shown) to each other, and it is located in depression portion 14 provided in bottom plate portion 11 of lower shell 10. In this female connector portion 34, a portion of igniter 40 closer to the lower end of terminal pin 42 is arranged as being exposed. The male connector is inserted in female connector portion 34, so that electrical conduction between a core wire of the harness and terminal pin 42 is established.

Injection molding described above may be carried out with the use of lower shell 10 obtained by providing an adhesive layer in advance at a prescribed position on a surface of bottom plate portion 11 in a portion to be covered with holding portion 30. The adhesive layer can be formed by applying an adhesive in advance to a prescribed position of bottom plate portion 11 and curing the adhesive.

By doing so, the cured adhesive layer is located between bottom plate portion 11 and holding portion 30, so that holding portion 30 formed from a resin molded portion can more firmly be secured to bottom plate portion 11. Therefore, by providing the adhesive layer annularly along a circumferential direction so as to surround opening 15 provided in bottom plate portion 11, higher sealability can be ensured in that portion.

For the adhesive applied in advance to bottom plate portion 11, an adhesive containing as a source material, a resin material excellent in heat resistance, durability, corrosion resistance, and the like after curing is suitably made use of, and for example, an adhesive containing a cyanoacrylate-based resin or a silicone-based resin as a source material is particularly suitably made use of. An adhesive containing, other than the resin materials described above, a phenol-based resin, an epoxy-based resin, a melamine-based resin, a urea-based resin, a polyester-based resin, an alkyd-based resin, a polyurethane-based resin, a polyimide-based resin, a polyethylene-based resin, a polypropylene-based resin, a polyvinyl chloride-based resin, a polystyrene-based resin, a polyvinyl acetate-based resin, a polytetrafluoroethylene-based resin, an acrylonitrile butadiene styrene-based resin, an acrylonitrile styrene-based resin, an acrylic resin, a polyamide-based resin, a polyacetal-based resin, a polycarbonate-based resin, a polyphenylene ether-based resin, a polybutylene terephthalate-based resin, a polyethylene terephthalate-based resin, a polyolefin-based resin, a polyphenylene sulfide-based resin, a polysulfone-based resin, a polyether sulfone-based resin, a polyarylate-based resin, a polyether ether ketone-based resin, a polyamide imide-based resin, a liquid crystal polymer, styrene-based rubber, olefin-based rubber, and the like can be made use of as the adhesive described above.

Though such a construction example that igniter 40 can be fixed to lower shell 10 by injection molding holding portion 30 formed from the resin molded portion is exemplified, other alternative means can also be used for fixing igniter 40 to lower shell 10.

Cup-shaped member 50 is assembled to bottom plate portion 11 so as to cover protruding cylindrical portion 13, holding portion 30, and igniter 40. Cup-shaped member 50 has a substantially cylindrical shape with bottom having an open end portion on the side of bottom plate portion 11, and contains an enhancer chamber 55 accommodating enhancer agent 56. Cup-shaped member 50 is arranged to protrude toward combustion chamber 60 accommodating gas generating agent 61, such that enhancer chamber 55 provided therein faces ignition portion 41 of igniter 40.

Cup-shaped member 50 has a top wall portion 51 and a sidewall portion 52 defining enhancer chamber 55 described above and an extension portion 53 extending radially outward from a portion of sidewall portion 52 on a side of an open end. Extension portion 53 is formed to extend along an inner surface of bottom plate portion 11 of lower shell 10. Specifically, extension portion 53 is in a shape curved along a shape of an inner bottom surface of bottom plate portion 11 in a portion where protruding cylindrical portion 13 is provided and in the vicinity thereof and includes a tip end portion 54 extending like a flange in a radially outer portion thereof.

Tip end portion 54 in extension portion 53 is arranged between bottom plate portion 11 and lower-side supporting member 70 along the axial direction of the housing and sandwiched between bottom plate portion 11 and lower-side supporting member 70 along the axial direction of the housing. Since lower-side supporting member 70 is pressed toward bottom plate portion 11 by gas generating agent 61, cushion material 85, upper-side supporting member 80, and top plate portion 21 arranged above, cup-shaped member 50 is in such a state that tip end portion 54 of extension portion 53 is pressed toward bottom plate portion 11 by lower-side supporting member 70 and fixed to bottom plate portion 11. Thus, cup-shaped member 50 is prevented from falling from bottom plate portion 11 without using caulking or press-fitting for fixing cup-shaped member 50.

Cup-shaped member 50 has an opening in neither of top wall portion 51 and sidewall portion 52 and surrounds enhancer chamber 55 provided therein. This cup-shaped member 50 bursts or melts with increase in pressure in enhancer chamber 55 or conduction of heat generated therein when enhancer agent 56 is ignited as a result of actuation of igniter 40, and mechanical strength thereof is relatively low.

Therefore, a member made of metal such as aluminum or an aluminum alloy or a member made of a resin such as a thermosetting resin represented by an epoxy resin and the like and a thermoplastic resin represented by a polybutylene terephthalate resin, a polyethylene terephthalate resin, a polyamide resin (such as nylon 6 or nylon 66), a polypropylene sulfide resin, a polypropylene oxide resin, and the like is suitably made use of for cup-shaped member 50.

In addition to the above, a component which is formed from a member made of metal high in mechanical strength as represented by iron or copper, has an opening in sidewall portion 52 thereof, and has a sealing tape adhered to close the opening can also be made use of for cup-shaped member 50. A method of fixing cup-shaped member 50 is not limited to a fixing method using lower-side supporting member 70 described above, and other fixing methods may be made use of.

Enhancer agent 56 charged into enhancer chamber 55 generates thermal particles as it is ignited to burn by flames produced as a result of actuation of igniter 40. Enhancer agent 56 should be able to reliably start burning gas generating agent 61, and generally, a composition or the like composed of metal powders/oxidizing agent represented by B/KNO₃ or the like is employed. For enhancer agent 56, a powdery enhancer agent, an enhancer agent formed in a prescribed shape by a binder, or the like is made use of. A shape of enhancer agent 56 formed by a binder includes, for example, various shapes such as a granule, a column, a sheet, a sphere, a cylinder with a single hole, a cylinder with multiple holes, a tablet, and the like.

In a space surrounding a portion where cup-shaped member 50 described above is arranged in a space inside the housing, combustion chamber 60 accommodating gas generating agent 61 is located. Specifically, as described above, cup-shaped member 50 is arranged to protrude into combustion chamber 60 formed in the housing, and a space provided in a portion of this cup-shaped member 50 facing the outer surface of sidewall portion 52 is formed as combustion chamber 60.

In a space surrounding the space accommodating gas generating agent 61 of combustion chamber 60 in a radial direction of the housing, filter 90 is arranged along an inner circumference of the housing. Filter 90 has a cylindrical shape, and it is arranged such that a central axis substantially matches with the axial direction of the housing.

Gas generating agent 61 is an agent which is ignited by thermal particles generated as a result of actuation of igniter 40 and produces a gas as it burns. A non-azide-based gas generating agent is preferably employed as gas generating agent 61, and gas generating agent 61 is formed as a molding generally containing a fuel, an oxidizing agent, and an additive. For the fuel, for example, a triazole derivative, a tetrazole derivative, a guanidine derivative, an azodicarbonamide derivative, a hydrazine derivative, or the like, or combination thereof is made use of. Specifically, for example, nitroguanidine, guanidine nitrate, cyanoguanidine, 5-aminotetrazole, and the like are suitably made use of. In addition, as the oxidizing agent, for example, basic nitrate such as basic copper nitrate, perchlorate such as ammonium perchlorate or potassium perchlorate, nitrate containing cations selected from an alkali metal, an alkali earth metal, a transition metal, and ammonia, or the like is made use of. As the nitrate, for example, sodium nitrate, potassium nitrate, or the like is suitably made use of. Moreover, as the additive, a binder, a slag formation agent, a combustion modifier, or the like is exemplified. As the binder, for example, metal salt of carboxymethyl cellulose, an organic binder such as stearate, or an inorganic binder such as synthetic hydrotalcite and Japanese acid clay can suitably be made use of. As the slag formation agent, silicon nitride, silica, Japanese acid clay, or the like can suitably be made use of. In addition, as the combustion modifier, a metal oxide, ferrosilicon, activated carbon, graphite, or the like can suitably be made use of.

A shape of a molding of gas generating agent 61 includes various shapes such as a particulate shape including a granule, a pellet, and a column, and a disc shape. In addition, among columnar moldings, a molding with holes having through holes in the molding (such as a cylindrical shape with a single hole or a cylindrical shape with multiple holes) is also made use of. These shapes are preferably selected as appropriate depending on specifications of an air bag apparatus in which gas generator 1 is incorporated, and for example, a shape optimal for the specifications is preferably selected by selecting a shape allowing change over time of a rate of generation of a gas during burning of gas generating agent 61. Furthermore, in addition to a shape of gas generating agent 61, a size of a molding or an amount thereof for filling is preferably selected as appropriate, in consideration of a linear burning velocity, a pressure exponent, or the like of gas generating agent 61.

For example, a filter obtained by winding and sintering a metal wire rod of stainless steel or iron steel, a filter formed by press-working a mesh material into which metal wire rods are knitted to thereby pack the same, a filter obtained by winding a perforated metal plate, or the like is made use of as filter 90. Here, as the mesh material, specifically, a wire gauze of stocking stitch, a plain-woven wire gauze, an aggregate of crimped metal wire rods, or the like is made use of. In addition, as the perforated metal plate, for example, expanded metal obtained by making staggered cuts in a metal plate and providing holes by widening the cuts to thereby work the metal plate in a mesh, hook metal obtained by perforating a metal plate and collapsing burrs caused around a periphery of the hole for flattening, or the like is made use of. In this case, a size or a shape of a hole to be provided can be changed as appropriate as required, and holes different in size or shape may be included in the same metal plate. It is noted that, for example, a steel plate (mild steel) or a stainless steel plate can suitably be made use of as a metal plate, and a nonferrous metal plate of aluminum, copper, titanium, nickel, or an alloy thereof, or the like can also be made use of.

Filter 90 functions as cooling means for cooling a gas by depriving heat at a high temperature of the gas when the gas produced in combustion chamber 60 passes through this filter 90 and also functions as removal means for removing residues (slag) or the like contained in the gas. Therefore, in order to sufficiently cool the gas and to prevent emission of residues to the outside, the gas generated in combustion chamber 90 should reliably pass through filter 90. Filter 90 is arranged to be distant from circumferential wall portion 22 so as to provide a gap 25 of a prescribed size between circumferential wall portion 22 of upper shell 20 and circumferential wall portion 12 of lower shell 10 which form the circumferential wall portion of the housing.

A plurality of gas discharge openings 23 are provided in circumferential wall portion 22 of upper shell 20 in a portion facing filter 90. This gas discharge opening 23 serves for guiding a gas which has passed through filter 90 to the outside of the housing. To an inner circumferential surface of circumferential wall portion 22 of upper shell 20, a sealing tape 24 made of a metal is attached to close gas discharge opening 23. An aluminum foil or the like having a tacky member applied to its one surface is made use of as this sealing tape 24 and hermeticity of combustion chamber 60 is ensured by sealing tape 24.

In gas generator 1 in the present embodiment, sealing tape 24 in a portion closing some of the plurality of gas discharge openings 23 is greater in thickness than sealing tape 24 in a portion closing remaining gas discharge openings of the plurality of gas discharge openings 23. Thus, sealing tape 24 in a portion relatively greater in thickness is adjusted to be higher in resistance to break than sealing tape 24 in a portion relatively smaller in thickness.

With such a construction, by adjusting as appropriate a thickness of sealing tape 24 with the condition above being defined as the premise, in a low-temperature environment and a room-temperature environment, when gas generator 1 is actuated, only sealing tape 24 in a portion relatively small in thickness is cleaved with increase in pressure in the housing with burning of gas generating agent 61, only gas discharge openings closed by that portion open, and the gas can be discharged to the outside. In a high-temperature environment, when gas generator 1 is actuated, not only sealing tape 24 in the portion relatively small in thickness but also sealing tape 24 in the portion relatively large in thickness are cleaved with increase in pressure in the housing with burning of gas generating agent 61, all gas discharge openings open, and the gas can be discharged to the outside.

By adjusting as appropriate a thickness of sealing tape 24 with the condition above being defined as the premise, in a low-temperature environment, when gas generator 1 is actuated, only sealing tape 24 in the portion relatively small in thickness is cleaved with increase in pressure in the housing with burning of gas generating agent 61, only gas discharge openings closed by that portion open, and the gas can be discharged to the outside. In a room-temperature environment and in a high-temperature environment, when gas generator 1 is actuated, not only sealing tape 24 in the portion relatively small in thickness but also sealing tape 24 in the portion relatively large in thickness are cleaved with increase in pressure in the housing with burning of gas generating agent 61, all gas discharge openings open, and the gas can be discharged to the outside.

Therefore, by adopting the construction, variation in output characteristics based on a difference in ambient temperature can be suppressed and the gas generator can be high in performance.

A pressure in the housing necessary for opening gas discharge opening 23 by cleaving sealing tape 24 varies depending not only on a thickness of sealing tape 24 described above but also on an opening area (that is, an opening diameter) of gas discharge opening 23. Therefore, by adjusting not only a thickness of sealing tape 24 but also a thickness and an opening area of gas discharge opening 23 individually, resistance to break for each section of sealing tape 24 can arbitrarily be set.

Various manners can be adopted as a specific construction of gas discharge opening 23 and sealing tape 24 allowing suppression of variation in output characteristics based on a difference in ambient temperature described above, and details thereof will be described later.

In the vicinity of the end portion of combustion chamber 60 located on the side of bottom plate portion 11, lower-side supporting member 70 is arranged. Lower-side supporting member 70 has an annular shape and is arranged as substantially being applied to filter 90 and bottom plate portion 11 so as to cover a boundary portion between filter 90 and bottom plate portion 11. Thus, lower-side supporting member 70 is located between bottom plate portion 11 and gas generating agent 61 in the vicinity of the end portion of combustion chamber 60.

Lower-side supporting member 70 has an abutment portion 72 erected to abut to the inner circumferential surface of the axial end portion of filter 90 located on the side of bottom plate portion 11 and a bottom portion 71 provided to extend radially inward from abutment portion 72. Bottom portion 71 is formed to extend along an inner bottom surface of bottom plate portion 11 of lower shell 10. Specifically, bottom portion 71 is in a shape bent along the shape of the inner bottom surface of bottom plate portion 11 including a portion where protruding cylindrical portion 13 is provided, and includes a tip end portion 73 erected in a radially inward portion thereof.

Lower-side supporting member 70 functions as flow-out prevention means for preventing a gas generated in combustion chamber 60 during actuation from flowing out through a gap between the lower end of filter 90 and bottom plate portion 11 without passing through filter 90. Lower-side supporting member 70 is formed, for example, by press-working a plate-shaped member made of metal, and suitably made of a member formed from a steel plate of common steel, special steel, or the like (such as a cold rolled steel plate or a stainless steel plate).

Tip end portion 54 of extension portion 53 of cup-shaped member 50 described above is arranged between bottom plate portion 11 and bottom portion 71 of lower-side supporting member 70 along the axial direction of the housing, and thus is held as being sandwiched between bottom plate portion 11 and bottom portion 71 along the axial direction of the housing. Cup-shaped member 50 is thus in such a state that tip end portion 54 of extension portion 53 is pressed toward bottom plate portion 11 by bottom portion 71 of lower-side supporting member 70 and fixed to bottom plate portion 11.

Upper-side supporting member 80 is arranged at the end portion of combustion chamber 60 located on the side of top plate portion 21. Upper-side supporting member 80 is substantially in a shape of a disc and is arranged as being applied to filter 90 and top plate portion 21 so as to cover the boundary portion between filter 90 and top plate portion 21. Thus, upper-side supporting member 80 is located between top plate portion 21 and gas generating agent 61 in the vicinity of the end portion of combustion chamber 60.

Upper-side supporting member 80 has a bottom portion 81 abutting to top plate portion 21 and an abutment portion 82 erected from a peripheral edge of bottom portion 81. Abutment portion 82 abuts to the inner circumferential surface of an axial end portion of filter 90 located on the side of top plate portion 21.

Upper-side supporting member 80 functions as flow-out prevention means for preventing a gas generated in combustion chamber 60 during actuation from flowing out through a gap between the upper end of filter 90 and top plate portion 21 without passing through filter 90. Similarly to lower-side supporting member 70, upper-side supporting member 80 is formed, for example, by press-working a plate-shaped member made of metal, and suitably made of a member formed from a steel plate of common steel, special steel, or the like (such as a cold rolled steel plate or a stainless steel plate).

In this upper-side supporting member 80, an annular cushion material 85 is arranged to be in contact with gas generating agent 61 accommodated in combustion chamber 60. Cushion material 85 is thus located between top plate portion 21 and gas generating agent 61 in a portion of combustion chamber 60 on the side of top plate portion 21 and presses gas generating agent 61 toward bottom plate portion 11. This cushion material 85 is provided for the purpose of preventing gas generating agent 61 made of a molding from being crushed by vibration or the like, and made of a member suitably formed of a molding of ceramic fibers, rock wool, or a foamed resin (such as foamed silicone, foamed polypropylene, or foamed polyethylene), or rubber represented by chloroprene or EPDM.

An operation of gas generator 1 in the present embodiment described above will now be described with reference to Fig. 1.

When a vehicle on which gas generator 1 in the present embodiment is mounted collides, collision sensing means separately provided in the vehicle senses collision, and based thereon, igniter 40 is actuated in response to power feed through a control unit separately provided in the vehicle. Enhancer agent 56 accommodated in enhancer chamber 55 is ignited to burn by flames produced as a result of actuation of igniter 40, to thereby generate a large amount of thermal particles. Burning of this enhancer agent 56 bursts or melts cup-shaped member 50 and the thermal particles described above flow into combustion chamber 60.

The thermal particles which have flowed in ignite and burn gas generating agent 61 accommodated in combustion chamber 60 and a large amount of gas is produced. The gas produced in combustion chamber 60 passes through filter 90. At that time, heat is deprived of the gas through filter 90 and the gas is cooled, slag contained in the gas is removed by filter 90, and the gas flows into an outer peripheral portion of the housing.

As an internal pressure in the housing increases, sealing by sealing tape 24 which has closed gas discharge opening 23 of upper shell 20 is broken entirely or partially in accordance with an ambient temperature, and the gas is discharged to the outside of the housing through gas discharge opening 23 of which sealing by sealing tape 24 has been released. The discharged gas is introduced in the air bag provided adjacent to gas generator 1 and it expands and develops the air bag.

A specific construction of gas discharge opening 23 and sealing tape 24 which can be adopted in gas generator 1 in the present embodiment described above will be described below in detail, with variation thereof being included.

In gas generator 1 in the present embodiment described above, a plurality of sealing tapes in a form of a band or a single sealing tape in a form of a band are/is employed to close all of a plurality of gas discharge openings (corresponding to the plurality of gas passage holes) provided in the circumferential wall portion (corresponding to the partition wall portion) of the upper shell. More specifically, when the plurality of sealing tapes in the form of the band are used to close all of the plurality of gas discharge openings, the sealing tapes are contiguously bonded to the circumferential wall portion such that each end portion of the plurality of sealing tapes in the form of the band is partially layered on an adjacent sealing tape. When a single sealing tape in the form of the band is used (which is not covered by the claims) to close all of the plurality of gas discharge openings, the sealing tape is bonded to the circumferential wall portion such that end portions of the single sealing tape in the form of the band are layered on each other.

When the plurality of sealing tapes in the form of the band are used to close all of the plurality of gas discharge openings and when the single sealing tape in the form of the band is used to close all of the plurality of gas discharge openings, in any case, the single sealing tape closes a plurality of gas discharge openings. Some of the gas discharge openings are closed by a layered bonding region which is a portion where the sealing tape(s) are (is) layered and remaining gas discharge openings are closed by a non-layered bonding region which is a portion where the sealing tape(s) are (is) not layered. It is not that only one gas discharge opening is closed by a single sealing tape, and thus decrease in number of bonded sealing tapes is achieved. By providing the layered bonding region and the non-layered bonding region, resistance to break of the sealing tape can differ.

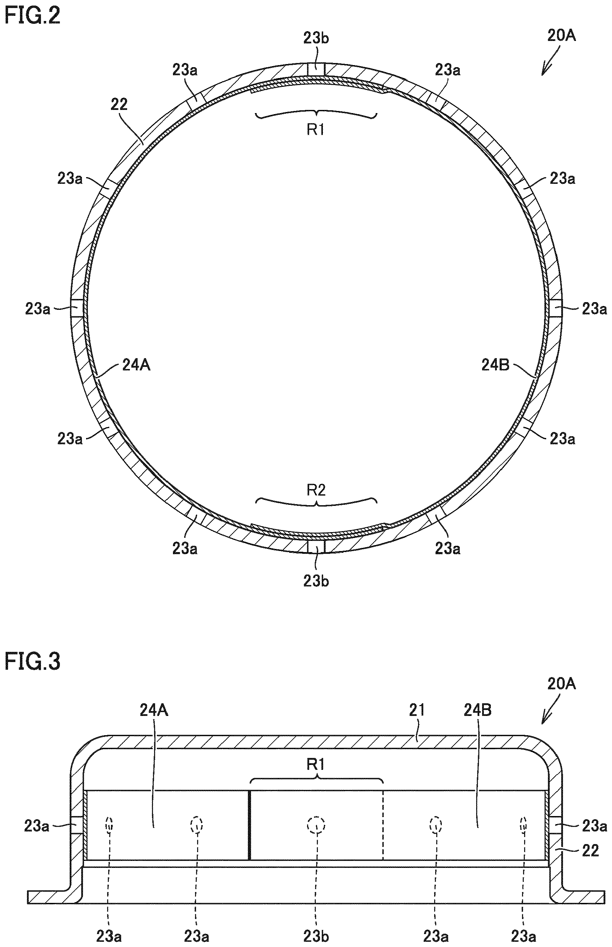

Figs. 2 to 9 are end views or cross-sectional views of an upper shell according to first to seventh construction examples based on the present embodiment. An end surface of the upper shell shown in Figs. 2, 4, 6, 8, and 9 extends along the line II-II shown in Fig. 1, and a cross-section shown in Figs. 3, 5, and 7 shows a state in Fig. 1 with the internal construction elements and the lower shell having been removed.

### (First Construction Example)

Figs. 2 and 3 are an end view and a cross-sectional view of an upper shell according to the first construction example, respectively. The first construction example will initially be described in detail with reference to Figs. 2 and 3.

As shown in Figs. 2 and 3, in an upper shell 20A, a plurality of sealing tapes 24A and 24B in a form of a band are bonded to the inner circumferential surface of circumferential wall portion 22 provided with a plurality of gas discharge openings 23a and 23b, so that the plurality of gas discharge openings 23a and 23b are closed by the plurality of sealing tapes 24A and 24B in the form of the band.

There are twelve gas discharge openings 23a and 23b in total, and they are provided to scatter at different positions in the circumferential direction of circumferential wall portion 22 of upper shell 20A. More specifically, twelve gas discharge openings 23a and 23b in total are set to be equal in opening area (that is, opening diameter) to one another and they are provided as being aligned at an equal interval along the circumferential direction of circumferential wall portion 22.

There are 2 sealing tapes 24A and 24B in the form of the band in total, and both of them are bonded to the inner circumferential surface of circumferential wall portion 22. Two sealing tapes 24A and 24B in the form of the band are equal in thickness, width, and length to each other, and two sealing tapes 24A and 24B in the form of the band close all of twelve gas discharge openings 23a and 23b described above.

Two sealing tapes 24A and 24B in the form of the band are provided to totally extend around circumferential wall portion 22 in the circumferential direction, by being contiguously arranged such that a direction of extension thereof matches with the circumferential direction of circumferential wall portion 22 and each one of a pair of end portions located in the direction of extension is layered on an adjacent sealing tape. More specifically, sealing tape 24A is in such a state that a pair of end portions in the direction of extension thereof is covered with sealing tape 24B and sealing tape 24B is in such a state that a pair of end portions in the direction of extension thereof covers sealing tape 24A.

Thus, two layered bonding regions R1 and R2 are provided by a portion where two sealing tapes 24A and 24B in the form of the band are layered on each other, and two layered bonding regions R1 and R2 are arranged evenly along the circumferential direction of circumferential wall portion 22. Circumferential wall portion 22 in a portion located between two layered bonding regions R1 and R2 is covered with only any one of two sealing tapes 24A and 24B in the form of the band and the portion is the non-layered bonding region which is the portion where adjacent sealing tapes are not layered on each other.

Positions of bonding of two sealing tapes 24A and 24B in the form of the band are adjusted such that two gas discharge openings 23b arranged at positions corresponding to boundaries between equally divided two parts of circumferential wall portion 22 along the circumferential direction, which are some of twelve gas discharge openings 23a and 23b, are closed by layered bonding regions R1 and R2 described above, respectively, and ten gas discharge openings 23a which are remainder of twelve gas discharge openings 23a and 23b are closed by the non-layered bonding region described above.

With the construction as above, in the first construction example, each of the two sealing tapes in the form of the band closes seven gas discharge openings adjacent to each other among twelve gas discharge openings in total so that the number of bonded sealing tapes can be decreased. By providing the layered bonding region and the non-layered bonding region, resistance to break of the sealing tape in the portion closing two gas discharge openings covered with the layered bonding region and resistance to break of the sealing tape in the portion closing remaining ten gas discharge openings covered with the non-layered bonding region can differ from each other.

### (Second Construction Example)

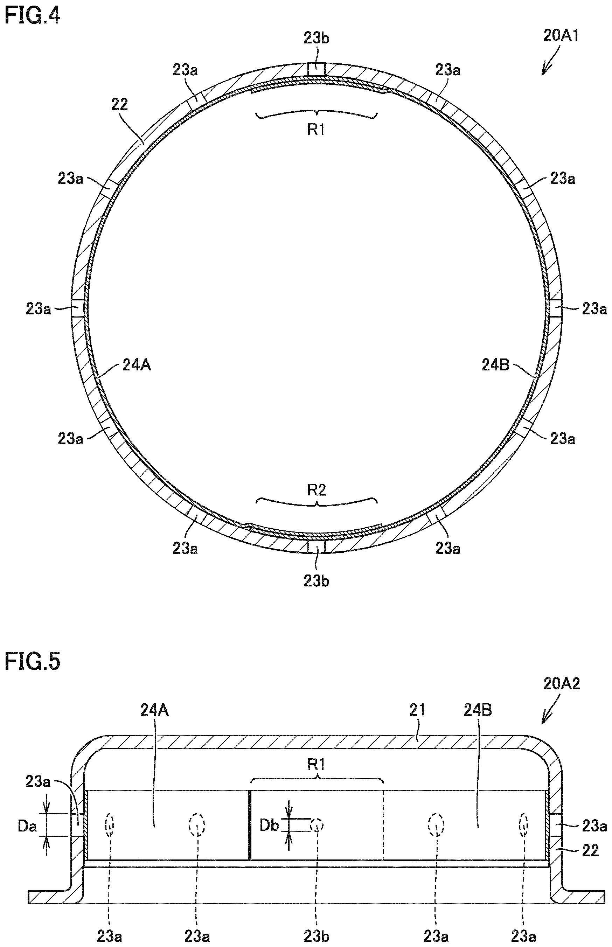

Fig. 4 is an end view of an upper shell according to a second construction example. The second construction example will now be described in detail with reference to Fig. 4. The second construction example is different from the first construction example described above only in construction of the layered bonding region.

As shown in Fig. 4, in an upper shell 20A1, similarly to upper shell 20A according to the first construction example described above, a plurality of sealing tapes 24A and 24B in a form of a band are bonded to the inner circumferential surface of circumferential wall portion 22 provided with a plurality of gas discharge openings 23a and 23b, so that the plurality of gas discharge openings 23a and 23b are closed by the plurality of sealing tapes 24A and 24B in the form of the band.

In the second construction example, unlike the first construction example described above, sealing tape 24A is in such a state that one of the pair of end portions in the direction of extension thereof is covered with sealing tape 24B and the other end portion covers sealing tape 24B. Sealing tape 24B is in such a state that one of the pair of end portions in the direction of extension thereof is covered with sealing tape 24A and the other end portion covers sealing tape 24A.

With the construction as above as well, as in the first construction example described above, each of the two sealing tapes in the form of the band closes seven gas discharge openings adjacent to each other among twelve gas discharge openings in total so that the number of bonded sealing tapes can be decreased. By providing the layered bonding region and the non-layered bonding region, resistance to break of the sealing tape in the portion closing two gas discharge openings covered with the layered bonding region and resistance to break of the sealing tape in the portion closing remaining ten gas discharge openings covered with the non-layered bonding region can differ from each other.

### (Third Construction Example)

Fig. 5 is a cross-sectional view of an upper shell according to a third construction example. The third construction example will now be described in detail with reference to Fig. 5. The third construction example is different from the first construction example described above only in construction of the gas discharge opening.

As shown in Fig. 5, in an upper shell 20A2, similarly to upper shell 20A according to the first construction example described above, a plurality of sealing tapes 24A and 24B in a form of a band are bonded to the inner circumferential surface of circumferential wall portion 22 provided with a plurality of gas discharge openings 23a and 23b, so that the plurality of gas discharge openings 23a and 23b are closed by the plurality of sealing tapes 24A and 24B in the form of the band.

In the third construction example, unlike the first construction example described above, an opening area of each of two gas discharge openings 23b closed by layered bonding regions R1 and R2 is smaller than an opening area of each of ten gas discharge openings 23a closed by the non-layered bonding region. More specifically, an opening diameter (Db shown in the figure) of each of two gas discharge openings 23b closed by layered bonding regions R1 and R2 is smaller than an opening diameter (Da shown in the figure) of each of ten gas discharge openings 23a closed by the non-layered bonding region (Db < Da).

With such a construction as well, as in the first construction example described above, each of the two sealing tapes in the form of the band closes seven gas discharge openings adjacent to each other among twelve gas discharge openings in total so that the number of bonded sealing tapes can be decreased. By providing the layered bonding region and the non-layered bonding region, resistance to break of the sealing tape in the portion closing two gas discharge openings covered with the layered bonding region and resistance to break of the sealing tape in the portion closing remaining ten gas discharge openings covered with the non-layered bonding region can differ from each other.

With the construction as above, resistance to break of the sealing tape is adjusted also based on a difference in opening area of the gas discharge opening. Therefore, resistance to break of the sealing tape in the portion closing two gas discharge openings and resistance to break of the sealing tape in the portion closing remaining ten gas discharge openings can further arbitrarily differ. Thus, by decreasing an opening area of the gas discharge opening covered with the layered bonding region, force applied to the sealing tape in the portion closing the gas discharge opening due to increase in pressure in the housing decreases, so that the gas discharge opening is less likely to open and consequently a closed state is more likely to be kept than in the case of the gas discharge opening covered with the non-layered bonding region. Therefore, with the construction as above, resistance to break of the sealing tape can further differ between the layered bonding region and the non-layered bonding region.

Though an example in which an opening area per one of the gas discharge openings closed by the layered bonding region is smaller than an opening area per one of the gas discharge openings closed by the non-layered bonding region has been exemplified in the present third construction example, an opening area per one of the gas discharge openings closed by the layered bonding region may be larger than an opening area per one of the gas discharge openings closed by the non-layered bonding region. With such a construction as well, resistance to break of the sealing tape can differ between the layered bonding region and the non-layered bonding region.

### (Fourth Construction Example)

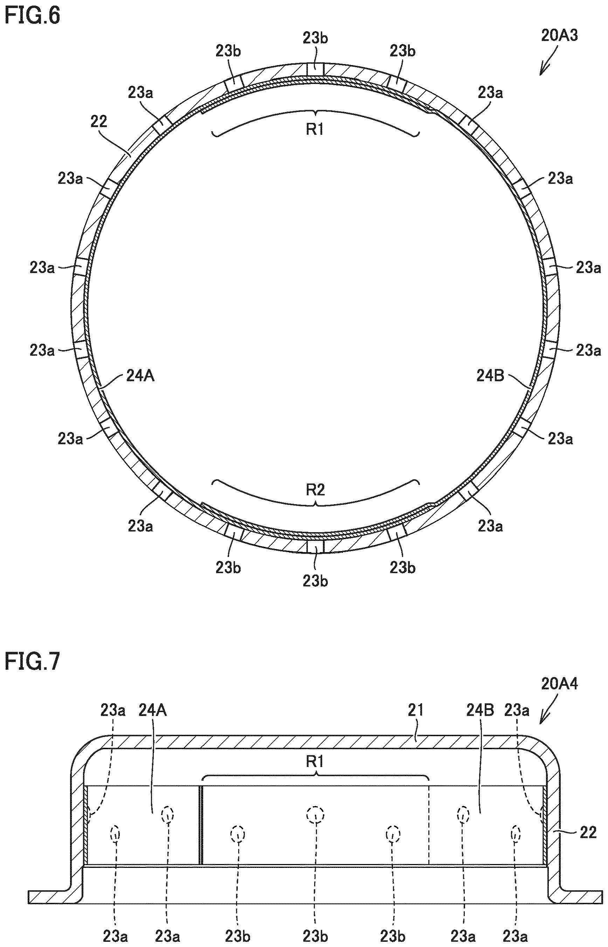

Fig. 6 is a cross-sectional view of an upper shell according to a fourth construction example. The fourth construction example will now be described in detail with reference to Fig. 6.

As shown in Fig. 6, in an upper shell 20A3, similarly to upper shell 20A according to the first construction example described above, a plurality of sealing tapes 24A and 24B in a form of a band are bonded to the inner circumferential surface of circumferential wall portion 22 provided with a plurality of gas discharge openings 23a and 23b, so that the plurality of gas discharge openings 23a and 23b are closed by the plurality of sealing tapes 24A and 24B in the form of the band.

There are eighteen gas discharge openings 23a and 23b in total, and they are provided to scatter at different positions in the circumferential direction of circumferential wall portion 22 of upper shell 20A3. More specifically, eighteen gas discharge openings 23a and 23b in total are set to be equal in opening area (that is, opening diameter) to one another and they are provided as being aligned at an equal interval along the circumferential direction of circumferential wall portion 22.

There are two sealing tapes 24A and 24B in the form of the band in total, and both of them are bonded to the inner circumferential surface of circumferential wall portion 22. Two sealing tapes 24A and 24B in the form of the band are equal in thickness, width, and length to each other, and two sealing tapes 24A and 24B in the form of the band close all of eighteen gas discharge openings 23a and 23b described above.

Two sealing tapes 24A and 24B in the form of the band are provided to totally extend around circumferential wall portion 22 in the circumferential direction, by being contiguously arranged such that a direction of extension thereof matches with the circumferential direction of circumferential wall portion 22 and each one of a pair of end portions located in the direction of extension is layered on an adjacent sealing tape. More specifically, sealing tape 24A is in such a state that a pair of end portions in the direction of extension thereof is covered with sealing tape 24B and sealing tape 24B is in such a state that a pair of end portions in the direction of extension thereof covers sealing tape 24A.

Thus, two layered bonding regions R1 and R2 are provided by a portion where two sealing tapes 24A and 24B in the form of the band are layered on each other, and two layered bonding regions R1 and R2 are arranged evenly along the circumferential direction of circumferential wall portion 22. Circumferential wall portion 22 in a portion located between two layered bonding regions R1 and R2 is covered with only any one of two sealing tapes 24A and 24B in the form of the band and the portion is the non-layered bonding region which is the portion where adjacent sealing tapes are not layered on each other.

Positions of bonding of two sealing tapes 24A and 24B in the form of the band are adjusted such that six gas discharge openings 23b located to face with the center of upper shell 20 being interposed, which are some of eighteen gas discharge openings 23a and 23b, are closed by layered bonding regions R1 and R2 described above, and twelve gas discharge openings 23a which are remainder of eighteen gas discharge openings 23a and 23b are closed by the non-layered bonding region described above.

With the construction as above, in the fourth construction example, each of the two sealing tapes in the form of the band closes twelve gas discharge openings adjacent to each other among eighteen gas discharge openings in total so that the number of bonded sealing tapes can be decreased. By providing the layered bonding region and the non-layered bonding region, resistance to break of the sealing tape in the portion closing six gas discharge openings covered with the layered bonding region and resistance to break of the sealing tape in the portion closing remaining twelve gas discharge openings covered with the non-layered bonding region can differ from each other.

### (Fifth Construction Example)

Fig. 7 is a cross-sectional view of an upper shell according to a fifth construction example. The fifth construction example will now be described in detail with reference to Fig. 7. The fifth construction example is different from the fourth construction example described above mainly in construction of the gas discharge openings.

As shown in Fig. 7, in an upper shell 20A4, similarly to upper shell 20A3 according to the fourth construction example described above, a plurality of sealing tapes 24A and 24B in a form of a band are bonded to the inner circumferential surface of circumferential wall portion 22 provided with a plurality of gas discharge openings 23a and 23b, so that the plurality of gas discharge openings 23a and 23b are closed by the plurality of sealing tapes 24A and 24B in the form of the band.

In the fifth construction example, unlike the fourth construction example described above, the plurality of gas discharge openings 23a and 23b are provided not only to scatter at different positions in the circumferential direction of circumferential wall portion 22 but also to scatter at different positions in the axial direction of circumferential wall portion 22. More specifically, the gas discharge openings located adjacently to each other in the circumferential direction of circumferential wall portion 22 are arranged at positions displaced in the axial direction, so that gas discharge openings 23a and 23b are zigzag provided in circumferential wall portion 22.

Therefore, in the fifth construction example, a width of two sealing tapes 24A and 24B in the form of the band is adjusted so as to be able to cover zigzag provided gas discharge openings 23a and 23b.

With such a construction as well, as in the fourth construction example described above, each of the two sealing tapes in the form of the band closes twelve gas discharge openings adjacent to each other among eighteen gas discharge openings in total so that the number of bonded sealing tapes can be decreased. By providing the layered bonding region and the non-layered bonding region, resistance to break of the sealing tape in the portion closing six gas discharge openings covered with the layered bonding region and resistance to break of the sealing tape in the portion closing remaining twelve gas discharge openings covered with the non-layered bonding region can differ from each other.

### (Sixth Construction Example)

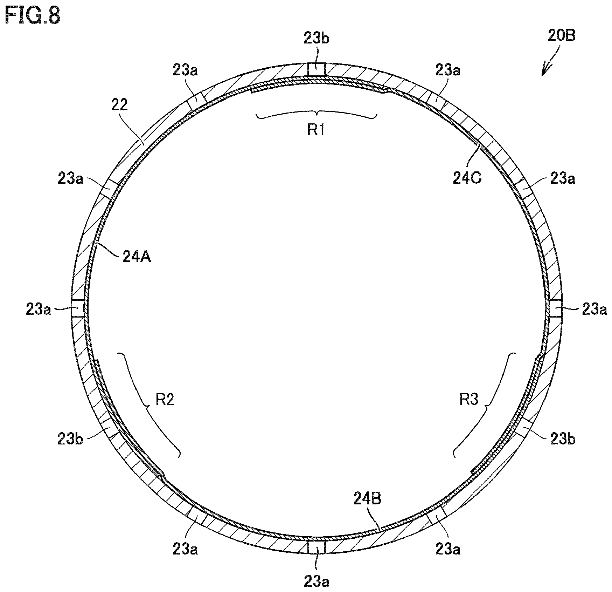

Fig. 8 is an end view of an upper shell according to a sixth construction example. The sixth construction example will now be described in detail with reference to Fig. 8.

As shown in Fig. 8, in an upper shell 20B, a plurality of sealing tapes 24A, 24B, and 24C in a form of a band are bonded to the inner circumferential surface of circumferential wall portion 22 provided with a plurality of gas discharge openings 23a and 23b, so that the plurality of gas discharge openings 23a and 23b are closed by the plurality of sealing tapes 24A, 24B, and 24C in the form of the band.

There are twelve gas discharge openings 23a and 23b in total, and they are provided to scatter at different positions in the circumferential direction of circumferential wall portion 22 of upper shell 20B. More specifically, twelve gas discharge openings 23a and 23b in total are set to be equal in opening area (that is, opening diameter) to one another and they are provided as being aligned at an equal interval along the circumferential direction of circumferential wall portion 22.

There are three sealing tapes 24A, 24B, and 24C in the form of the band in total, and all of them are bonded to the inner circumferential surface of circumferential wall portion 22. Three sealing tapes 24A, 24B, and 24C in the form of the band are equal in thickness, width, and length to one another, and three sealing tapes 24A, 24B, and 24C in the form of the band close all of twelve gas discharge openings 23a and 23b described above.

Three sealing tapes 24A, 24B, and 24C in the form of the band are provided to totally extend around circumferential wall portion 22 in the circumferential direction, by being contiguously arranged such that a direction of extension thereof matches with the circumferential direction of circumferential wall portion 22 and each one of a pair of end portions located in the direction of extension is layered on an adjacent sealing tape. More specifically, sealing tape 24A is in such a state that one of the pair of end portions in the direction of extension thereof is covered with sealing tape 24B and the other end portion is covered with sealing tape 24C. Sealing tape 24B is in such a state that one of the pair of end portions in the direction of extension thereof is covered with sealing tape 24C and the other end portion covers sealing tape 24A. Sealing tape 24C is in such a state that one of the pair of end portions in the direction of extension thereof covers sealing tape 24A and the other end portion covers sealing tape 24B.

Thus, three layered bonding regions R1, R2, and R3 are provided by a portion where two of three sealing tapes 24A, 24B, and 24C in the form of the band are layered on each other, and three layered bonding regions R1, R2, and R3 are arranged evenly along the circumferential direction of circumferential wall portion 22. Circumferential wall portion 22 in a portion located between three layered bonding regions R1, R2, and R3 is covered with only any one of three sealing tapes 24A, 24B, and 24C in the form of the band and the portion is the non-layered bonding region which is the portion where adjacent sealing tapes are not layered on each other.

Positions of bonding of three sealing tapes 24A, 24B, and 24C in the form of the band are adjusted such that three gas discharge openings 23b arranged at positions corresponding to boundaries among equally divided three parts of circumferential wall portion 22 along the circumferential direction, which are some of twelve gas discharge openings 23a and 23b, are closed by layered bonding regions R1, R2, and R3 described above, respectively, and nine gas discharge openings 23a which are remainder of twelve gas discharge openings 23a and 23b are closed by the non-layered bonding region described above.

With the construction as above, in the sixth construction example, each of the three sealing tapes in the form of the band closes five gas discharge openings adjacent to each other among twelve gas discharge openings in total so that the number of bonded sealing tapes can be decreased. By providing the layered bonding region and the non-layered bonding region, resistance to break of the sealing tape in the portion closing three gas discharge openings covered with the layered bonding region and resistance to break of the sealing tape in the portion closing remaining nine gas discharge openings covered with the non-layered bonding region can differ from each other.

### (Seventh Construction Example not claimed but useful for understanding the invention)

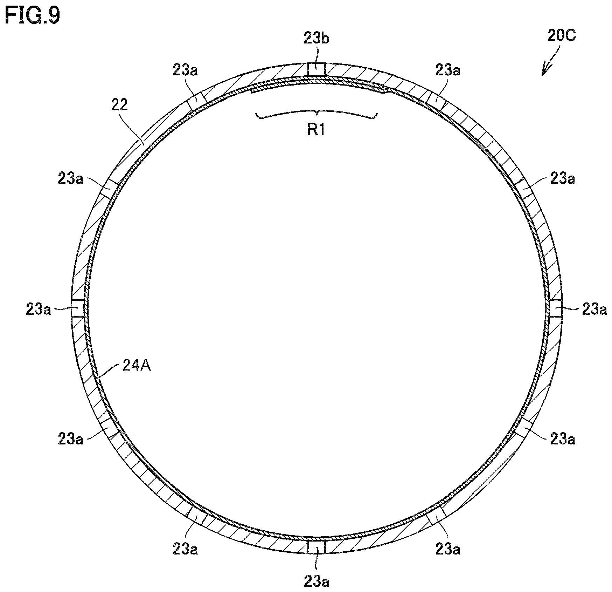

Fig. 9 is an end view of an upper shell according to the seventh construction example. The seventh construction example will now be described in detail with reference to Fig. 9.

As shown in Fig. 9, in an upper shell 20C, a single sealing tape 24A in a form of a band is bonded to the inner circumferential surface of circumferential wall portion 22 provided with a plurality of gas discharge openings 23a and 23b, so that the plurality of gas discharge openings 23a and 23b are closed by single sealing tape 24A in the form of the band.

There are twelve gas discharge openings 23a and 23b in total, and they are provided to scatter at different positions in the circumferential direction of circumferential wall portion 22 of upper shell 20C. More specifically, twelve gas discharge openings 23a and 23b in total are set to be equal in opening area (that is, opening diameter) to one another and they are provided as being aligned at an equal interval along the circumferential direction of circumferential wall portion 22.

Single sealing tape 24A in the form of the band is provided to extend around circumferential wall portion 22 in the circumferential direction such that a direction of extension thereof matches with the circumferential direction of circumferential wall portion 22 and a pair of end portions located in the direction of extension is layered with the end portions being layered on each other. More specifically, sealing tape 24A is in such a state that one of the pair of end portions in the direction of extension thereof is covered with the other end portion of sealing tape 24A.

Thus, single layered bonding region R1 is provided by a portion where single sealing tape 24A in the form of the band is layered, and single layered bonding region R1 is arranged at a prescribed position along the circumferential direction of circumferential wall portion 22. Circumferential wall portion 22 in a portion except for single layered bonding region R1 is the non-layered bonding region which is the portion where single sealing tape 24A in the form of the band is not layered.

A position of bonding of single sealing tape 24A in the form of the band is adjusted such that single gas discharge opening 23b which is one of twelve gas discharge openings 23a and 23b is closed by layered bonding region R1 described above and eleven gas discharge openings 23a which are remainder of twelve gas discharge openings 23a and 23b are closed by the non-layered bonding region described above.

With the construction as above, in the seventh construction example, the single sealing tape in the form of the band closes all of twelve gas discharge openings in total so that the number of bonded sealing tapes can be decreased. By providing the layered bonding region and the non-layered bonding region, resistance to break of the sealing tape in the portion closing single gas discharge opening covered with the layered bonding region and resistance to break of the sealing tape in the portion closing remaining eleven gas discharge openings covered with the non-layered bonding region can differ from each other.

An effect below can be obtained by adopting the construction of gas discharge opening 23 and sealing tape 24 in the first to seventh construction examples shown above.

Firstly, in the first to seventh construction examples, the number of bonded sealing tapes can be reduced as described above. Therefore, not only the number of parts can be reduced but also resistance to break of the sealing tape can differ between the layered bonding region and the non-layered bonding region without lowering in productivity in manufacturing. In particular, since only one bonded sealing tape suffices in the seventh construction example, the number of times of bonding can be reduced to one and productivity is noticeably improved.

Secondly, since a plurality of sealing tapes can be the same in specifications (that is, the same in thickness, width, and length) in the first to sixth construction examples, management of parts is facilitated, which contributes to productivity.

Thirdly, since the layered bonding regions are evenly arranged along the circumferential direction of the circumferential wall portion in the first to sixth construction examples, thrust applied to the gas generator by the gas discharged through the gas discharge opening is canceled. Therefore, external force is prevented from being applied to the gas generator and safety at the time of actuation can be ensured. Since large external force is not applied to the gas generator either in the seventh construction example unless an extremely large layered bonding region is set along the circumferential direction of the circumferential wall portion, safety at the time of actuation can be ensured by setting sufficiently high fixing capability of a retainer which fixes the gas generator.

Fourthly, since a sufficient margin for bonding a sealing tape can be ensured in the circumferential wall portion in a portion around the gas discharge opening in the first to seventh construction examples, sealability of the sealing tape can sufficiently be high. Therefore, absorption of moisture by the gas generating agent or the enhancer agent can reliably be prevented and the gas generator can be high in performance and reliability.

Fifthly, since a sufficient margin for bonding of the sealing tape can be ensured as described above in the first to seventh construction examples, adjacent gas discharge openings can be provided in relative proximity to each other, which contributes also to reduction in size of the gas generator. In that case, since the gas discharge openings are relatively densely arranged so that a flow of the gas which passes through the filter is also distributed, efficiency in use of the filter is enhanced and a function for cooling and a function for removal of slag by the filter are improved. With improvement in function for cooling and function for removal of slag by the filter, the filter can also be reduced in size, which contributes to reduction in size of the gas generator also in this aspect.

Sixthly, in the first to seventh construction examples, all of the plurality of gas discharge openings are provided in a cylindrical section of the circumferential wall portion where a diameter is uniform. By adopting such a construction, no wrinkle is produced in the sealing tape in bonding of the sealing tape, and bonding thereof is facilitated and high sealability can also be ensured. Since a margin for bonding of the sealing tape along the axial direction of the circumferential wall portion can be suppressed to necessary minimum, the cylindrical section of the circumferential wall portion necessary for ensuring the margin for bonding can be made smaller along the axial direction, which contributes to reduction in size of the gas generator also in this aspect. In the first to fourth, sixth, and seventh construction examples, the gas discharge openings are disposed as being aligned in the circumferential direction of the circumferential wall portion. Therefore, as compared with the construction in the fifth construction example in which the gas discharge openings are scattered in the axial direction of the circumferential wall portion, the cylindrical section of the circumferential wall portion uniform in diameter can further be made smaller in length along the axial direction of the circumferential wall portion, which is particularly advantageous in reduction in size of the gas generator.

In the first to seventh construction examples shown above, preferably, a total opening area of some gas discharge openings closed by the layered bonding region is equal to or slightly smaller than a total opening area of the remaining gas discharge openings closed by the non-layered bonding region. With such a construction, even under such a condition of operation that all of the gas discharge openings do not open, high gas output can be obtained.

Though an example in which the total number of gas discharge openings provided in the circumferential wall portion is set to twelve or eighteen in the first to seventh construction examples shown above has been described by way of example, the total number of gas discharge openings is not limited as such and it is preferably in a range approximately from eight to twenty-four. In that case, the number of gas discharge openings closed by the layered bonding region is preferably in a range approximately from two to twelve when a plurality of sealing tapes are employed, and preferably approximately one or two when only a single sealing tape is employed.

Though an example in which two or three sealing tapes equal in length are employed in the first to sixth construction examples shown above has been described by way of example, sealing tapes different in length may be employed as necessary, and the number of sealing tapes used is not limited as such and may be four or more.

Though an example in which the gas discharge openings are disposed as being aligned in the first to fourth, sixth, and seventh construction examples shown above and an example in which the gas discharge openings are zigzag arranged in the fifth construction example shown above have been described by way of example, a layout of the gas discharge openings is not limited as such, and the gas discharge openings may be provided, for example, in grids, as being staggered, or in multiple stages in the axial direction of the circumferential wall portion.

Though an example in which the sealing tape is bonded to the inner circumferential surface of the circumferential wall portion in the first to seventh construction examples shown above has been described by way of example, the sealing tape may be bonded to the outer circumferential surface of the circumferential wall portion.

### (Second Embodiment)

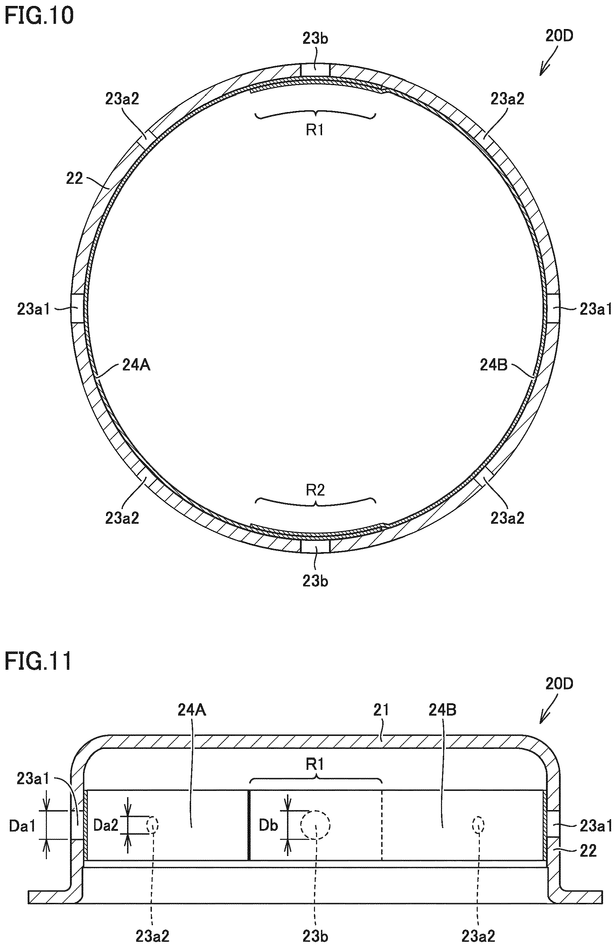

Figs. 10 and 11 are an end view and a cross-sectional view of an upper shell of a gas generator in a second embodiment of the present invention. The gas generator in the present embodiment will initially be described with reference to Figs. 10 and 11.

The gas generator in the present embodiment is basically the same in construction as gas generator 1 in the first embodiment described above, and it is different from gas generator 1 in the first embodiment only in construction of an upper shell and a sealing tape bonded thereto.

Gas generator 1 in the first embodiment described above is designed such that some of the plurality of gas discharge openings are cleaved and others are not cleaved at the time of actuation under a specific condition based on a difference in ambient temperature (that is, in a low-temperature environment, a room-temperature environment, or a high-temperature environment). Unlike this gas generator, the gas generator in the present embodiment is designed such that a plurality of gas discharge openings are all cleaved stepwise at the time of actuation under any condition.

As shown in Figs. 10 and 11, in an upper shell 20D of the gas generator in the present embodiment, sealing tapes 24A and 24B in a form of a band are bonded to the inner circumferential surface of circumferential wall portion 22 provided with a plurality of gas discharge openings 23a1, 23a2, and 23b, so that sealing tapes 24A and 24B in the form of the band close the plurality of gas discharge openings 23a1, 23a2, and 23b.

There are eight gas discharge openings 23a1, 23a2, and 23b in total, and they are provided to scatter at different positions in the circumferential direction of circumferential wall portion 22 of upper shell 20D. More specifically, four gas discharge openings 23a1 and 23b arranged at every other position along the circumferential direction among eight gas discharge openings 23a1, 23a2, and 23b in total are set to be equal in opening area (that is, opening diameter) to one another, and they are provided as large holes relatively large in opening area. Remaining four gas discharge openings 23a2 other than four gas discharge openings 23a1 and 23b among eight gas discharge openings 23a1, 23a2, and 23b in total are set to be equal in opening area (that is, opening diameter) to one another, and they are provided as small holes relatively small in opening area. An opening diameter Da1 of two gas discharge openings 23a1, an opening diameter Db of two gas discharge openings 23b, and an opening diameter Da2 of four gas discharge openings 23a2 satisfy relation of Da1 = Db > Da2. The plurality of gas discharge openings 23a1, 23a2, and 23b are provided as being aligned at an equal interval along the circumferential direction of circumferential wall portion 22.

There are two sealing tapes 24A and 24B in the form of the band in total, and both of them are bonded to the inner circumferential surface of circumferential wall portion 22. Two sealing tapes 24A and 24B in the form of the band are equal in thickness, width, and length to each other, and two sealing tapes 24A and 24B in the form of the band close all of twelve gas discharge openings 23a1, 23a2, and 23b described above.

Two sealing tapes 24A and 24B in the form of the band are provided to totally extend around circumferential wall portion 22 in the circumferential direction, by being contiguously arranged such that a direction of extension thereof matches with the circumferential direction of circumferential wall portion 22 and each one of a pair of end portions located in the direction of extension is layered on an adjacent sealing tape. More specifically, sealing tape 24A is in such a state that a pair of end portions in the direction of extension thereof is covered with sealing tape 24B and sealing tape 24B is in such a state that a pair of end portions in the direction of extension thereof covers sealing tape 24A.

Thus, two layered bonding regions R1 and R2 are provided by a portion where two sealing tapes 24A and 24B in the form of the band are layered on each other, and two layered bonding regions R1 and R2 are arranged evenly along the circumferential direction of circumferential wall portion 22. Circumferential wall portion 22 in a portion located between two layered bonding regions R1 and R2 is covered with only any one of two sealing tapes 24A and 24B in the form of the band and the portion is the non-layered bonding region which is the portion where adjacent sealing tapes are not layered on each other.

Positions of bonding of two sealing tapes 24A and 24B in the form of the band are adjusted such that two gas discharge openings 23b arranged at positions corresponding to boundaries between equally divided two parts of circumferential wall portion 22 along the circumferential direction, which are some of eight gas discharge openings 23a1, 23a2, and 23b, are closed by layered bonding regions R1 and R2 described above, respectively, and six gas discharge openings 23a1 and 23a2 which are remainder of eight gas discharge openings 23a1, 23a2, and 23b are closed by the non-layered bonding region described above.

With the construction as above, in the present embodiment, each of the two sealing tapes in the form of the band closes five gas discharge openings adjacent to each other among eight gas discharge openings in total so that the number of bonded sealing tapes can be decreased. By providing the layered bonding region and the non-layered bonding region and by setting four large holes larger in opening area and four small holes smaller in opening area of eight gas discharge openings in total, resistance to break of the sealing tape in the portion closing gas discharge openings provided as two large holes covered with the layered bonding region, resistance to break of the sealing tape in the portion closing gas discharge openings provided as two large holes covered with the non-layered bonding region, and resistance to break of the sealing tape in the portion closing gas discharge openings provided as four small holes covered with the non-layered bonding region can differ from one another.

More specifically, the gas generator in the present embodiment includes three types of gas discharge openings, which are gas discharge openings 23a1 relatively large in opening area closed by the portion of the sealing tape relatively small in thickness by being covered with the non-layered bonding region, gas discharge openings 23a2 relatively small in opening area closed by the portion of the sealing tape relatively small in thickness by being covered with the non-layered bonding region, and gas discharge openings 23b relatively large in opening area closed by the portion of the sealing tape relatively large in thickness by being covered with layered bonding regions R1 and R2. Therefore, a pressure necessary for opening these three types of gas discharge openings is set in three stages, and the pressure is higher in the order of gas discharge opening 23a1, gas discharge opening 23a2, and gas discharge opening 23b.

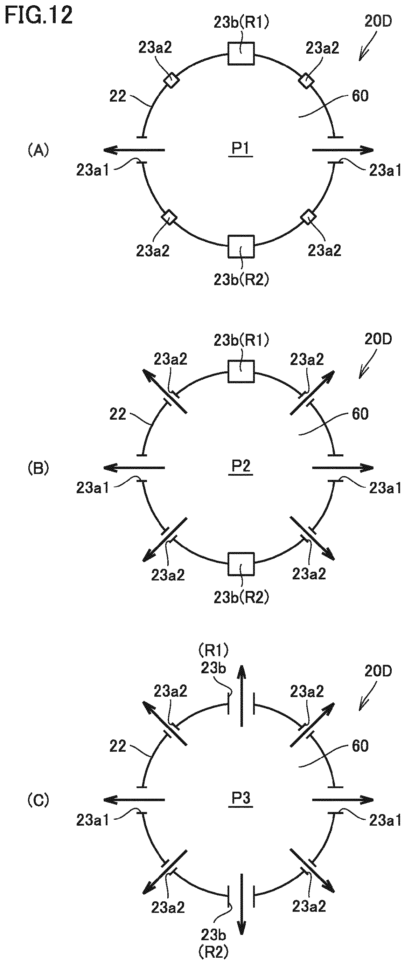

Fig. 12 is a diagram schematically showing gas discharge openings which open stepwise when the gas generator in the present embodiment is actuated. An operation of the gas generator in the present embodiment at the time of actuation will be described below in detail with reference to Fig. 12. Fig. 12 (A), (B), and (C) each schematically shows a state at the time point of lapse of a prescribed period of time since start of actuation, and the elapsed time is longer in the order of Fig. 12 (A), (B), and (C).

When the gas generator in the present embodiment is actuated, gas generating agent 61 starts to burn and an internal pressure in combustion chamber 60 accordingly starts to increase. In the gas generator in the present embodiment, in a process of increase in internal pressure in combustion chamber 60, the plurality of gas discharge openings 23a1, 23a2, and 23b open stepwise.

In a first stage after start of actuation, the internal pressure in combustion chamber 60 has not reached a pressure at which all of eight gas discharge openings 23a1, 23a2, and 23b can open. Therefore, eight gas discharge openings 23a1, 23a2, and 23b do not open and the internal pressure continues to increase.

In a second stage after start of actuation, as shown in Fig. 12 (A), the internal pressure in combustion chamber 60 reaches an internal pressure P1 at which two gas discharge openings 23a1 which open at a lowest pressure among eight gas discharge openings 23a1, 23a2, and 23b can open, and sealing tapes 24A and 24B in a portion covering two gas discharge openings 23a1 are accordingly cleaved so that a gas is discharged through two open gas discharge openings 23a1. Thus, gas output is obtained in a relatively short period of time since start of actuation and expansion and development of the air bag can be started in an early stage.

In a third stage after start of actuation, as shown in Fig. 12 (B), the internal pressure in combustion chamber 60 reaches an internal pressure P2 at which four gas discharge openings 23a2 which open at a second lowest pressure among eight gas discharge openings 23a1, 23a2, and 23b can open, and sealing tapes 24A and 24B in a portion covering four gas discharge openings 23a2 are accordingly cleaved so that a gas is discharged through six open gas discharge openings 23a1 and 23a2 including two gas discharge openings 23a1 which have already been open. Thus, expansion and development of the air bag can be maintained.

In a fourth stage after start of actuation, as shown in Fig. 12 (C), the internal pressure in combustion chamber 60 reaches an internal pressure P3 at which two gas discharge openings 23b which open at a highest pressure among eight gas discharge openings 23a1, 23a2, and 23b can open, and sealing tapes 24A and 24B in a portion covering two gas discharge openings 23b are accordingly cleaved so that a gas is discharged through all eight open gas discharge openings 23a1, 23a2, and 23b including six gas discharge openings 23a1 and 23a2 which have already been open. Thus, gas generating agent 61 burns in a stable manner with the internal pressure in combustion chamber 60 being maintained in an appropriate high-pressure state, gas output high in a stable manner is obtained until gas generating agent 61 burns out, and consequently, sustained development of the air bag can be continued.

In a fifth stage after start of actuation, output of the gas is stopped with gas generating agent 61 having burnt out, and thus actuation of the gas generator ends and development of the air bag also ends.

With the gas generator in the present embodiment described above, the effect as described in the first embodiment above of which detailed description will not be repeated here, that is, the effect of varying resistance to break of the sealing tape closing the gas passage holes without lowering in productivity in manufacturing, can be obtained. In addition, with the gas generator in the present embodiment, an effect as below can further be obtained.

Firstly, a maximum value of the internal pressure in the combustion chamber at the time of actuation of the gas generator can be suppressed to a considerably low level without raising the maximum value to more than necessary. In order to continually burn the gas generating agent, a state that the internal pressure in the combustion chamber is high to a considerable extent should be maintained. Therefore, the conventional gas generator has been designed such that a higher internal pressure is reached with a sufficient margin beyond the maximum value of the internal pressure in the combustion chamber which is basically necessary for reliably maintaining the high pressure. In contrast, in the gas generator in the present embodiment, the stepwise operation as described above can be realized, so that a rate of increase in internal pressure in the combustion chamber by burning of the gas generating agent and a rate of lowering in internal pressure in the combustion chamber due to moderate stepwise emission of the gas from an early stage are balanced so that the internal pressure in the combustion chamber can be controlled over time to a desired value and the gas generating agent can sufficiently continually burn without a more than necessary margin as described above being secured. Therefore, since the margin can be less than in the conventional example, it is accordingly not necessary either to achieve extremely high performance of resistance to pressure of the gas generator. For example, the housing can be smaller in thickness than in the conventional example and reduction in cost for parts or reduction in weight can be realized.

Secondly, an operation of the gas generator in a low-temperature environment can be ensured. In general, in the low-temperature environment, it becomes more difficult to ensure a rate of increase in internal pressure in the combustion chamber than in a room-temperature environment and in a high-temperature environment. Therefore, in the conventional gas generator in which the gas discharge openings do not open stepwise (that is, all gas discharge openings substantially simultaneously open), the internal pressure in the combustion chamber abruptly lowers with opening of the gas discharge openings, and burning of the gas generating agent may end by the time the gas generating agent burns out. In the gas generator in the present embodiment, the stepwise operation as described above can be realized, so that abrupt lowering in internal pressure in the combustion chamber as described above does not occur even in the low-temperature environment and the gas generating agent can reliably burn out. Therefore, a gas generator higher in performance than in the conventional example can be obtained.

Thirdly, a difference in performance of gas output due to an ambient temperature can remarkably be lessened. As described above, in general, in the gas generator, a rate of increase in internal pressure in the combustion chamber is significantly different depending on a difference in ambient temperature. Therefore, a length in time during which the internal pressure in the combustion chamber can be maintained at the maximum value is also significantly different depending on an ambient temperature. In the gas generator in the present embodiment, the stepwise operation as described above can be realized. With stepwise opening of the gas discharge openings, drop in internal pressure in the combustion chamber at that time can effectively be suppressed, and consequently, dependency of the difference in length in time during which the internal pressure in the combustion chamber can be maintained at the maximum value on an ambient temperature can be lessened. Therefore, a gas generator higher in performance than in the conventional example can be obtained.

In the present embodiment, a gas generator in which eight gas discharge openings are provided in the upper shell, four of the eight gas discharge openings are provided as large holes equal in shape and size, remaining four gas discharge openings are provided as small holes equal in shape and size, and the gas discharge openings are closed by two sealing tapes, so that a pressure necessary for opening the gas discharge openings is set in three stages based on a combination of gas discharge openings in two levels and thicknesses of sealing tapes in two levels has been described by way of example. By changing as appropriate the number or a size of the gas discharge openings, the number of levels of gas discharge openings, a thickness or the number of sealing tapes, a degree of layering of the sealing tapes, or the number of levels of a thickness of the sealing tapes, the number of types of the gas discharge openings which open stepwise can arbitrarily be adjusted. Therefore, by optimizing these properties in accordance with specifications of individual gas generators, not only a gas generator high in performance can relatively readily be designed but also a degree of freedom in tuning of gas output can be broadened.

The gas generator in the present embodiment can naturally variously be modified as described in the first embodiment described above without departing from the gist of the present invention.

In addition, in the present embodiment, a gas generator designed such that a plurality of gas discharge openings are all cleaved stepwise at the time of actuation under any condition regardless of a difference in ambient temperature (that is, in a low-temperature environment, a room-temperature environment, or a high-temperature environment) as described above has been described by way of example. As in the first embodiment described above, a gas generator designed such that some of the plurality of gas discharge openings are cleaved and others are not cleaved at the time of actuation under a specific condition can also be provided. Specifically, by changing an opening area of individual gas discharge openings or a thickness of the sealing tape to a prescribed size or thickness without changing, for example, a construction of the gas discharge openings constituted of large holes and small holes or a method of bonding the sealing tape among the constructions disclosed in the present embodiment, a gas generator which can realize the operation as in the first embodiment described above can also be obtained.

### (Third Embodiment)

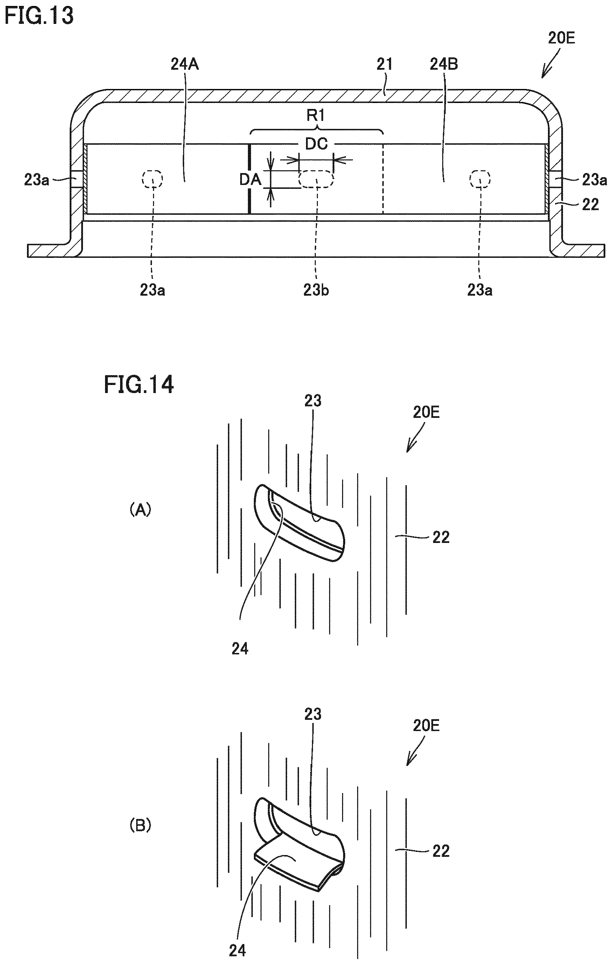

Fig. 13 is a cross-sectional view of an upper shell of a gas generator in a third embodiment of the present invention. A gas generator in the present embodiment will initially be described with reference to Fig. 13.

The gas generator in the present embodiment is basically the same in construction as the gas generator in the second embodiment described above, and it is different from the gas generator in the second embodiment in shape and size of an opening provided in the upper shell. The gas generator in the present embodiment is also designed such that a plurality of gas discharge openings are all cleaved stepwise at the time of actuation under any condition regardless of a difference in ambient temperature (that is, in a low-temperature environment, a room-temperature environment, or a high-temperature environment) similarly to the gas generator in the second embodiment described above.

As shown in Fig. 13, in an upper shell 20E in the gas generator in the present embodiment, a plurality of sealing tapes 24A and 24B in a form of a band are bonded to the inner circumferential surface of circumferential wall portion 22 provided with a plurality of gas discharge openings 23a and 23b, so that the plurality of gas discharge openings 23a and 23b are closed by the plurality of sealing tapes 24A and 24B in the form of the band.

There are eight gas discharge openings 23a and 23b in total (of which five are shown in the figure), and they are provided to scatter at different positions in the circumferential direction of circumferential wall portion 22 of upper shell 20E. More specifically, eight gas discharge openings 23a and 23b in total are set to be equal in opening area (that is, opening diameter) to one another and they are provided as being aligned at an equal interval along the circumferential direction of circumferential wall portion 22.

There are two sealing tapes 24A and 24B in the form of the band in total, and both of them are bonded to the inner circumferential surface of circumferential wall portion 22. Two sealing tapes 24A and 24B in the form of the band are equal in thickness, width, and length to each other, and two sealing tapes 24A and 24B in the form of the band close all of eight gas discharge openings 23a and 23b described above.

Two sealing tapes 24A and 24B in the form of the band are provided to totally extend around circumferential wall portion 22 in the circumferential direction, by being contiguously arranged such that a direction of extension thereof matches with the circumferential direction of circumferential wall portion 22 and each one of a pair of end portions located in the direction of extension is layered on an adjacent sealing tape. More specifically, sealing tape 24A is in such a state that a pair of end portions in the direction of extension thereof is covered with sealing tape 24B (only one end portion thereof is shown in the figure) and sealing tape 24B is in such a state that a pair of end portions in the direction of extension thereof covers sealing tape 24A (only one end portion thereof is shown in the figure).

Thus, two layered bonding regions R1 and R2 are provided by a portion where two sealing tapes 24A and 24B in the form of the band are layered on each other (only R1 of them is shown in the figure), and two layered bonding regions R1 and R2 are arranged evenly along the circumferential direction of circumferential wall portion 22. Circumferential wall portion 22 in a portion located between two layered bonding regions R1 and R2 is covered with only any one of two sealing tapes 24A and 24B in the form of the band and the portion is the non-layered bonding region which is the portion where adjacent sealing tapes are not layered on each other.

Positions of bonding of two sealing tapes 24A and 24B in the form of the band are adjusted such that two gas discharge openings 23b arranged at positions corresponding to boundaries between equally divided two parts of circumferential wall portion 22 along the circumferential direction, which are some of eight gas discharge openings 23a and 23b, are closed by layered bonding regions R1 and R2 described above, respectively, and six gas discharge openings 23a which are remainder of eight gas discharge openings 23a and 23b are closed by the non-layered bonding region described above.

Gas discharge openings 23a and 23b are in such a shape of an elongated hole that an opening width DC along the circumferential direction of circumferential wall portion 22 is greater than an opening width DA along the axial direction of circumferential wall portion 22 (that is, DC > DA). More strictly speaking, in the present embodiment, gas discharge openings 23a and 23b are provided as track-shaped holes having a pair of opening edge portions extending in parallel along circumferential wall portion 22 (more specifically, provided to extend in a direction the same as the circumferential direction of circumferential wall portion 22).

With such a construction as well, the effect as described in the first embodiment above of which detailed description will not be repeated here, that is, the effect of varying resistance to break of the sealing tape closing the gas passage holes without lowering in productivity in manufacturing, can be obtained. In addition, with the gas generator in the present embodiment, an effect as below can also further be obtained.

Firstly, the gas discharge openings are in a shape of an elongated hole extending along the circumferential direction of the circumferential wall portion. Then, as compared with an example in which a gas discharge opening is provided as a hole in a shape of a precise circle, a total opening area of the gas discharge openings can be greater without increase in opening width along the axial direction of the circumferential wall portion and without increase in number of gas discharge openings. Therefore, when a total opening area of the gas discharge openings is increased in order to suppress a maximum value of the internal pressure in the combustion chamber at the time of actuation of the gas generator to be considerably low without increase in maximum value more than necessary as well, sealability can be ensured without increase in width of the sealing tape (that is, length of the sealing tape in the axial direction of the circumferential wall portion) and increase in manufacturing cost can be prevented.

Secondly, an actual opening area with the gas discharge openings being open can differ depending on a difference in ambient temperature (that is, in a low-temperature environment, a room-temperature environment, or a high-temperature environment), and burning of the gas generating agent can be promoted in particular in the low-temperature environment. Therefore, a difference in performance of gas output due to an ambient temperature can remarkably be lessened and a gas generator higher in performance than in the conventional example can be obtained. This aspect will be described below in detail.

Fig. 14 is a diagram schematically showing a state in the vicinity of a gas discharge opening when the gas generator in the present embodiment is actuated. Fig. 14 (A) shows an example in which the gas generator is actuated in the room-temperature environment and in the high-temperature environment and Fig. 14 (B) shows an example in which the gas generator is actuated in the low-temperature environment.

As shown in Fig. 14 (A), when the gas generator in the present embodiment is actuated in the room-temperature environment and in the high-temperature environment, sealing tape 24 is completely broken along the opening edge portion of gas discharge opening 23 in a shape of an elongated hole in cleavage of sealing tape 24 in the portion closing gas discharge opening 23 with increase in internal pressure in combustion chamber 60, and broken sealing tape 24 does not adhere to the opening edge portion of gas discharge opening 23. Therefore, an opening area of gas discharge opening 23 and an actual opening area with gas discharge opening 23 being open as a result of cleavage of sealing tape 24 are equal to each other.

As shown in Fig. 14 (B), when the gas generator in the present embodiment is actuated in the low-temperature environment, sealing tape 24 is broken along the opening edge portion of gas discharge opening 23 in a shape of an elongated hole in cleavage of sealing tape 24 in the portion closing gas discharge opening 23 with increase in internal pressure in combustion chamber 60, however, it is not completely broken along the entire periphery of the opening edge portion. The sealing tape is not broken along one of the pair of opening edge portions which extend in parallel along circumferential wall portion 22 described above and broken sealing tape 24 adheres to the opening edge portion of gas discharge opening 23. Therefore, an actual opening area with gas discharge opening 23 being open as a result of cleavage of sealing tape 24 is smaller than an opening area of gas discharge opening 23 by an amount corresponding to a cross-sectional area of sealing tape 24.

Therefore, the relatively large total sum of actual opening areas of gas discharge openings 23 at the time of actuation of the gas generator is ensured in the room-temperature environment and in the high-temperature environment, whereas the total sum of actual opening areas of gas discharge openings 23 at the time of actuation of the gas generator is relatively decreased in the low-temperature environment. Thus, an amount of the gas emitted through gas discharge openings 23 as a result of opening of gas discharge openings 23 in the low-temperature environment is restricted as compared with the amount in the room-temperature environment and in the high-temperature environment, and increase in internal pressure in combustion chamber 60 is accordingly promoted. Therefore, burning of the gas generating agent can be promoted in particular in the low-temperature environment, so that a difference in performance of gas output due to the ambient temperature can remarkably be lessened, and consequently, a gas generator higher in performance than in the conventional example can be obtained.

The reason why a difference as to whether or not a part of the cleaved sealing tape adheres to the opening edge portion of the gas discharge opening in accordance with an ambient temperature is caused by adopting the feature as in the present embodiment is exclusively estimated as follows. Since the gas discharge opening is in a shape of an elongated hole which is not an annular hole, a distance from the center of the gas discharge opening to the opening edge portion is not uniform. Then, instantaneous energy required to break the sealing tape at once along the opening edge portion increases. A rate of increase in internal pressure in the combustion chamber in the room-temperature environment and in the high-temperature environment is high, and hence instantaneous energy is obtained. On the other hand, a rate of increase in internal pressure in the combustion chamber is low in the low-temperature environment, and hence instantaneous energy is not obtained.

Though an example in which a gas discharge opening is provided as a track-shaped hole has been described by way of example of a typical example of the shape of the elongated hole in the present embodiment, the shape of the gas discharge opening is not limited thereto, but may be oval or rectangular. In order to more reliably obtain the effect described above, the gas discharge opening in the shape of the elongated hole preferably has a pair of opening edge portions which extend in parallel along the circumferential wall portion and it is further preferably provided as a hole in a track shape or a rectangular shape described above.

### (Fourth Embodiment)

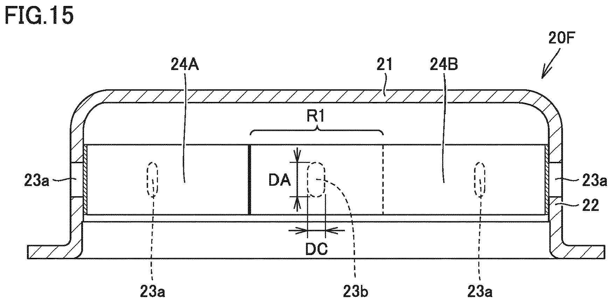

Fig. 15 is a cross-sectional view of an upper shell of a gas generator in a fourth embodiment of the present invention. The gas generator in the present embodiment will now be described with reference to Fig. 15.

The gas generator in the present embodiment is different from the gas generator in the third embodiment described above only in shape of a plurality of gas discharge openings 23a and 23b.

Specifically, as shown in Fig. 15, gas discharge openings 23a and 23b provided in an upper shell 20F are in such a shape of an elongated hole that opening width DA along the axial direction of circumferential wall portion 22 is greater than opening width DC along the circumferential direction of circumferential wall portion 22 (that is, DA > DC). More strictly speaking, in the present embodiment, gas discharge openings 23a and 23b are provided as track-shaped holes having a pair of opening edge portions extending in parallel along circumferential wall portion 22 (more specifically, provided to extend in a direction the same as the axial direction of circumferential wall portion 22).

With such a construction, not only the effect the same as the effect described in the third embodiment described above is obtained, but also a longer distance between adjacent gas discharge openings can be ensured than in the third embodiment described above and hence an effect of higher performance of resistance to pressure of the upper shell can be obtained.

Characteristic features shown in the first to fourth embodiments of the present invention described above (including individual characteristic features shown in the first to sevenths construction examples in the first embodiment of the present invention) can naturally be combined with one another without departing from the gist of the present invention.

Though an example in which the present invention is applied to gas discharge openings provided in a circumferential wall portion of a housing and a sealing tape closing the gas discharge openings has been described by way of example in the first to fourth embodiments of the present invention shown above, the present invention can naturally be applied to gas passage holes such as gas communication holes provided in various partition wall portions placed in the housing and a sealing tape closing the same.

Though an example in which the present invention is applied to what is called a disc type gas generator has been described by way of example in the first to fourth embodiments of the present invention shown above, applications of the present invention are not limited thereto and the present invention can be applied, for example, to a cylinder type gas generator.

The low-temperature environment, the room-temperature environment, and the high-temperature environment in the first to fourth embodiments of the present invention described above refer to an environment at a temperature around -40°C, an environment at a temperature around 20°C, and an environment at a temperature around 85°C, respectively.

The embodiments disclosed herein are illustrative and non-restrictive in every respect. The technical scope of the present invention is delimited by the terms of the claims, and includes any modifications within the scope and meaning equivalent to the terms of the claims.

### REFERENCE SIGNS LIST

1 gas generator; 10 lower shell; 11 bottom plate portion; 12 circumferential wall portion; 13 protruding cylindrical portion; 14 depression portion; 15 opening; 20, 20A, 20A1 to 20A4, 20B to 20F upper shell; 21 top plate portion; 22 circumferential wall portion; 23, 23a, 23a1, 23a2, 23b gas discharge opening; 24, 24A to 24C sealing tape; 25 gap; 30 holding portion; 31 inner cover portion; 32 outer cover portion; 33 coupling portion; 34 female connector portion; 40 igniter; 41 ignition portion; 42 terminal pin; 50 cup-shaped member; 51 top wall portion; 52 sidewall portion; 53 extension portion; 54 tip end portion; 55 enhancer chamber; 56 enhancer agent; 60 combustion chamber; 61 gas generating agent; 70 lower-side supporting member; 71 bottom portion; 72 abutment portion; 73 tip end portion; 80 upper-side supporting member; 81 bottom portion; 82 abutment portion; 85 cushion material; 90 filter; and R1 to R3 layered bonding region.

## Claims

1. A gas generator (1) comprising:
a gas generating agent (61);
an igniter (40) for burning the gas generating agent; and
a cylindrical partition wall portion (22) including a plurality of gas passage holes (23, 23a, 23a1, 23a2, 23b) through which a gas generated as a result of burning of the gas generating agent passes,
the plurality of gas passage holes being provided to scatter at different positions at least in a circumferential direction of the partition wall portion,
the gas generator being **characterized in that**
a plurality of sealing tapes (24, 24A to 24C) in a form of a band are bonded to any one of an inner circumferential surface and an outer circumferential surface of the partition wall portion,
the plurality of sealing tapes in the form of the band are provided to totally extend around the partition wall portion in the circumferential direction by being arranged contiguously such that a direction of extension of each of the sealing tapes matches with the circumferential direction of the partition wall portion and each one of a pair of end portions located in the direction of extension is layered on an adjacent sealing tape,
some of the plurality of gas passage holes are closed by a layered bonding region (R1 to R3), the layered bonding region being a portion where the adjacent sealing tapes are layered on each other, and remaining gas passage holes of the plurality of gas passage holes are closed by a non-layered bonding region, the non-layered bonding region being a portion where the adjacent sealing tapes are not layered on each other, and
the layered bonding regions are arranged evenly along the circumferential direction of the partition wall portion.

2. The gas generator according to claim 1, wherein
the plurality of the sealing tapes in the form of the band are equal in thickness, width, and length.

3. The gas generator according to claim 1 or 2, wherein
a total number of the plurality of sealing tapes in the form of the band is two.

4. The gas generator according to any one of claims 1 to 3, wherein
all of the plurality of gas passage holes are provided as being aligned along the circumferential direction of the partition wall portion.

5. The gas generator according to any one of claims 1 to 4, wherein
the plurality of gas passage holes are provided to scatter also at different positions in an axial direction of the partition wall portion.

6. The gas generator according to any one of claims 1 to 5, wherein
the partition wall portion includes a cylindrical section uniform in diameter, and
all of the plurality of gas passage holes are provided in the cylindrical section.

7. The gas generator according to any one of claims 1 to 6, wherein
at least one (23a, 23b) of the plurality of gas passage holes is in a shape of an elongated hole of which opening width (DC) along the circumferential direction of the partition wall portion is greater than an opening width (DA) along an axial direction of the partition wall portion.

8. The gas generator according to any one of claims 1 to 6, wherein
at least one (23a, 23b) of the plurality of gas passage holes is in a shape of an elongated hole of which opening width (DA) along an axial direction of the partition wall portion is greater than an opening width (DC) along the circumferential direction of the partition wall portion.

9. The gas generator according to any one of claims 1 to 8, wherein
the partition wall portion is a part of a housing forming an outer shell of the gas generator,
the housing includes a circumferential wall portion corresponding to the partition wall portion and a top plate portion (21) and a bottom plate portion (11) which close end portions in an axial direction of the circumferential wall portion, and
the plurality of gas passage holes are a plurality of gas discharge openings provided in the circumferential wall portion which allow discharge of the gas from the gas generator to outside.

10. The gas generator according to claim 9, wherein
an opening area per one of the some gas passage holes (23b) closed by the layered bonding region is smaller than an opening area per one of the remaining gas passage (23a) holes closed by the non-layered bonding region.

11. The gas generator according to claim 9, wherein
a total opening area of the some gas passage holes closed by the layered bonding region is smaller than a total opening area of the remaining gas passage holes closed by the non-layered bonding region.

12. The gas generator according to claim 9, wherein
the some gas passage holes (23b) closed by the layered bonding region and/or the remaining gas passage holes (23a) closed by the non-layered bonding region include gas passage holes different in opening area.

13. The gas generator according to claim 9, wherein
the plurality of gas passage holes consist of two types of holes of a plurality of small holes (23b) relatively smaller in opening area and a plurality of large holes (23a) relatively larger in opening area,
some of the plurality of large holes are closed by the layered bonding region,
a remainder of the plurality of large holes is closed by the non-layered bonding region, and
all of the plurality of small holes are closed by the non-layered bonding region.

## Patentansprüche

1. Gasgenerator (1) mit:
einem gaserzeugenden Mittel (61);
einem Zünder (40) zum Verbrennen des gaserzeugenden Mittels; und
einem zylindrischen Trennwandabschnitt (22), der eine Vielzahl von Gasdurchgangslöchern (23, 23a, 23a1, 23a2, 23b) hat, durch die ein Gas hindurchgeht, das als eine Folge des Verbrennens des gaserzeugenden Mittels erzeugt wird,
wobei die Vielzahl von Gasdurchgangslöchern vorgesehen sind, um bei unterschiedlichen Positionen wenigstens in einer Umfangsrichtung des Trennwandabschnitts verteilt zu sein,
wobei der Gasgenerator **dadurch gekennzeichnet ist, dass**
eine Vielzahl von Dichtungsstreifen (24, 24A bis 24C) in einer Form eines Bands an eine von einer Innenumfangsfläche und einer Außenumfangsfläche des Trennwandabschnitts gebondet sind,
die Vielzahl von Dichtungsstreifen in der Form des Bands vorgesehen sind, um sich gänzlich um den Trennwandabschnitt herum in der Umfangsrichtung zu erstrecken, indem sie angrenzend zueinander angeordnet sind, derart, dass eine Erstreckungsrichtung von jedem der Dichtungsstreifen mit der Umfangsrichtung des Trennwandabschnitts übereinstimmt und jeder von einem Paar von Endabschnitten, die in der Erstreckungsrichtung gelegen sind, auf einen benachbarten Dichtungsstreifen geschichtet ist,
einige der Vielzahl von Gasdurchgangslöchern durch eine geschichtete Bondingregion (R1 bis R3) geschlossen sind, wobei die geschichtete Bondingregion ein Abschnitt ist, wo die benachbarten Dichtungsstreifen aufeinander geschichtet sind, und verbleibende Gasdurchgangslöcher der Vielzahl von Gasdurchgangslöchern durch eine nicht geschichtete Bondingregion geschlossen sind, wobei die nicht geschichtete Bondingregion ein Abschnitt ist, wo die benachbarten Dichtungsstreifen nicht aufeinander geschichtet sind, und
die geschichteten Bondingregionen gleichmäßig entlang der Umfangsrichtung des Trennwandabschnitts angeordnet sind.

2. Gasgenerator nach Anspruch 1, wobei
die Vielzahl der Dichtungsstreifen in der Form des Bands eine gleiche Dicke, Breite und Länge haben.

3. Gasgenerator nach Anspruch 1 oder 2, wobei
eine Gesamtanzahl der Vielzahl von Dichtungsstreifen in der Form des Bands zwei ist.

4. Gasgenerator nach einem der Ansprüche 1 bis 3, wobei
alle der Vielzahl von Gasdurchgangslöchern vorgesehen sind, um entlang der Umfangsrichtung des Trennwandabschnitts ausgerichtet zu sein.

5. Gasgenerator nach einem der Ansprüche 1 bis 4, wobei
die Vielzahl von Gasdurchgangslöchern vorgesehen sind, um auch bei unterschiedlichen Positionen in einer Axialrichtung des Trennwandabschnitts verteilt zu sein.

6. Gasgenerator nach einem der Ansprüche 1 bis 5, wobei
der Trennwandabschnitt einen zylindrischen Bereich hat, der einen gleichförmigen Durchmesser hat, und
alle von der Vielzahl von Gasdurchgangslöchern in dem zylindrischen Bereich angeordnet sind.

7. Gasgenerator nach einem der Ansprüche 1 bis 6, wobei
wenigstens eines (23a, 23b) der Vielzahl von Gasdurchgangslöchern in einer Form eines Langlochs ist, dessen Öffnungsbreite (DC) entlang der Umfangsrichtung des Trennwandabschnitts größer ist als eine Öffnungsbreite (DA) entlang einer Axialrichtung des Trennwandabschnitts.

8. Gasgenerator nach einem der Ansprüche 1 bis 6, wobei
wenigstens eines (23a, 23b) der Vielzahl von Gasdurchgangslöchern in einer Form eines Langlochs ist, dessen Öffnungsbreite (DA) entlang einer Axialrichtung des Trennwandabschnitts größer ist als eine Öffnungsbreite (DC) entlang der Umfangsrichtung des Trennwandabschnitts.

9. Gasgenerator nach einem der Ansprüche 1 bis 8, wobei
der Trennwandabschnitt ein Teil eines Gehäuses ist, das eine äußere Schale des Gasgenerators bildet,
das Gehäuse einen Umfangswandabschnitt hat, der dem Trennwandabschnitt entspricht, und einen oberen Plattenabschnitt (21) und einen Bodenplattenabschnitt (11) hat, die Endabschnitte in einer Axialrichtung des Umfangswandabschnitts schließen, und
die Vielzahl von Gasdurchgangslöchern eine Vielzahl von Gasabgabeöffnungen sind, die in dem Umfangswandabschnitt vorgesehen sind und die eine Abgabe des Gases von dem Gasgenerator zu der Außenseite gestatten.

10. Gasgenerator nach Anspruch 9, wobei eine Öffnungsfläche pro eines der einigen Gasdurchgangslöcher (23b), die durch die geschichtete Bondingregion geschlossen sind, kleiner ist als eine Öffnungsfläche pro eines der verbleibenden Gasdurchgangslöcher (23a), die durch die nicht geschichtete Bondingregion geschlossen sind.

11. Gasgenerator nach Anspruch 9, wobei eine Gesamtöffnungsfläche der einigen Gasdurchgangslöcher, die durch die geschichtete Bondingregion geschlossen sind, kleiner ist als eine Gesamtöffnungsfläche der verbleibenden Gasdurchgangslöcher, die durch die nicht geschichtete Bondingregion geschlossen sind.

12. Gasgenerator nach Anspruch 9, wobei die einigen Gasdurchgangslöcher (23b), die durch die geschichtete Bondingregion geschlossen sind, und/oder die verbleibenden Gasdurchgangslöcher (23a), die durch die nicht geschichtete Bondingregion geschlossen sind, Gasdurchgangslöcher umfassen, die eine unterschiedliche Öffnungsfläche haben.

13. Gasgenerator nach Anspruch 9, wobei
die Vielzahl von Gasdurchgangslöchern aus zwei Typen von Löchern von einer Vielzahl von kleinen Löchern (23b), die eine relativ kleinere Öffnungsfläche haben, und einer Vielzahl von großen Löchern (23a) bestehen, die eine relativ größere Öffnungsfläche haben,
einige der Vielzahl von großen Löchern durch die geschichtete Bondingregion geschlossen sind,
ein Rest der Vielzahl von großen Löchern durch die nicht geschichtete Bondingregion geschlossen ist, und
alle von der Vielzahl von kleinen Löchern durch die nicht geschichtete Bondingregion geschlossen sind.

## Revendications

1. Générateur de gaz (1) comprenant :
un agent de génération de gaz (61) ;
un allumeur (40) pour faire brûler l'agent de génération de gaz ; et
une partie de paroi de séparation cylindrique (22) comprenant une pluralité de trous de passage de gaz (23, 23a, 23a1, 23a2, 23b) à travers lesquels un gaz généré suite à la combustion de l'agent de génération de gaz, passe,
la pluralité de trous de passage de gaz étant prévus pour être éparpillés à différentes positions au moins dans une direction circonférentielle de la partie de paroi de séparation,
le générateur de gaz étant **caractérisé en ce que** :
une pluralité de rubans d'étanchéité (24, 24A à 24C) se présentant sous la forme d'une bande sont reliés à l'une quelconque parmi une surface circonférentielle interne et une surface circonférentielle externe de la partie de paroi de séparation,
la pluralité de rubans d'étanchéité se présentant sous la forme de bande sont prévus pour s'étendre complètement autour de la partie de paroi de séparation dans la direction circonférentielle en étant agencés de manière contiguë de sorte qu'une direction d'extension de chacun des rubans d'étanchéité correspond à la direction circonférentielle de la partie de paroi de séparation et chacune d'une paire de parties d'extrémité positionnée dans la direction d'extension, est déposée en couche sur un ruban d'étanchéité adjacent,
certains de la pluralité de trous de passage de gaz sont fermés par une région de liaison stratiforme (R1 à R3), la région de liaison stratiforme étant une partie où les rubans d'étanchéité adjacents sont déposés en couche les uns sur les autres, et les trous de passage de gaz résiduels de la pluralité de trous de passage de gaz sont fermés par une région de liaison non stratiforme, la région de liaison non stratiforme étant une partie où les rubans d'étanchéité adjacents ne sont pas déposés en couche les uns sur les autres, et
les régions de liaison stratiformes sont agencées régulièrement le long de la direction circonférentielle de la partie de paroi de séparation.

2. Générateur de gaz selon la revendication 1, dans lequel :
la pluralité de rubans d'étanchéité se présentant sous la forme de la bande sont égaux du point de vue de l'épaisseur, de la largeur et de la longueur.

3. Générateur de gaz selon la revendication 1 ou 2, dans lequel :
un nombre total de la pluralité de rubans d'étanchéité se présentant sous la forme de la bande est de deux.

4. Générateur de gaz selon l'une quelconque des revendications 1 à 3, dans lequel :
tous les trous de la pluralité de trous de passage de gaz sont prévus en étant alignés le long de la direction circonférentielle de la partie de paroi de séparation.

5. Générateur de gaz selon l'une quelconque des revendications 1 à 4, dans lequel :
la pluralité de trous de passage de gaz sont prévus pour s'éparpiller également dans différentes positions dans une direction axiale de la partie de paroi de séparation.

6. Générateur de gaz selon l'une quelconque des revendications 1 à 5, dans lequel :
la partie de paroi de séparation comprend une section cylindrique uniforme du point de vue du diamètre, et
tous les trous de la pluralité de trous de passage de gaz sont prévus dans la section cylindrique.

7. Générateur de gaz selon l'une quelconque des revendications 1 à 6, dans lequel :
au moins l'un (23a, 23b) de la pluralité de trous de passage de gaz se présente sous une forme de trou allongé dont la largeur d'ouverture (DC) le long de la direction circonférentielle de la partie de paroi de séparation est supérieure à une largeur d'ouverture (DA) le long d'une direction axiale de la partie de paroi de séparation.

8. Générateur de gaz selon l'une quelconque des revendications 1 à 6, dans lequel :
au moins l'un (23a, 23b) de la pluralité de trous de passage de gaz se présente sous la forme d'un trou allongé dont la largeur d'ouverture (DA) le long d'une direction axiale de la partie de paroi de séparation est supérieure à une largeur d'ouverture (DC) le long de la direction circonférentielle de la partie de paroi de séparation.

9. Générateur de gaz selon l'une quelconque des revendications 1 à 8, dans lequel :
la partie de paroi de séparation fait partie d'un boîtier formant une coque externe du générateur de gaz,
le boîtier comprend une partie de paroi circonférentielle correspondant à la partie de paroi de séparation et à une partie de plaque supérieure (21) et à une partie de plaque inférieure (11) qui ferment des parties d'extrémité dans la direction axiale de la partie de paroi circonférentielle, et
la pluralité de trous de passage de gaz sont une pluralité d'ouvertures de décharge de gaz prévues dans la partie de paroi circonférentielle qui permettent la décharge du gaz du générateur de gaz à l'extérieur.

10. Générateur de gaz selon la revendication 9, dans lequel :
une zone d'ouverture pour l'un de certains des trous de passage de gaz (23b) fermés par la région de liaison stratiforme est inférieure à une zone d'ouverture pour l'un des trous de passage de gaz (23a) résiduels fermés par la région de liaison non stratiforme.

11. Générateur de gaz selon la revendication 9, dans lequel :
une zone d'ouverture totale de certains des trous de passage de gaz fermés par la région de liaison stratiforme est inférieure à une zone d'ouverture totale des trous de passage de gaz résiduels par la région de liaison non stratiforme.

12. Générateur de gaz selon la revendication 9, dans lequel :
certains des trous de passage de gaz (23b) fermés par la région de liaison stratiforme et/ou les trous de passage de gaz (23a) résiduels fermés par la région de liaison non stratiforme comprennent des trous de passage de gaz différents dans la zone d'ouverture.

13. Générateur de gaz selon la revendication 9, dans lequel :
la pluralité de trous de passage de gaz se composent de deux types de trous d'une pluralité de petits trous (23b) relativement plus petits dans la zone d'ouverture et d'une pluralité de gros trous (23a) relativement plus gros dans la zone d'ouverture,
certains de la pluralité de gros trous sont fermés par la région de liaison stratiforme,
un trou résiduel de la pluralité de gros trous est fermé par la région de liaison non stratiforme, et
tous les trous de la pluralité de petits trous sont fermés par la région de liaison non stratiforme.
